(19) Europäisches Patentamt / European Patent Office / Office européen des brevets

(11) **EP 2 835 037 B1**

(12) **EUROPÄISCHE PATENTSCHRIFT**

(45) Veröffentlichungstag und Bekanntmachung des Hinweises auf die Patenterteilung:
**06.07.2016   Patentblatt 2016/27**

(51) Int Cl.:
**H05B 37/02** (2006.01)    **H05B 33/08** (2006.01)
**H05B 41/392** (2006.01)

(21) Anmeldenummer: **13720747.8**

(22) Anmeldetag: **03.04.2013**

(86) Internationale Anmeldenummer:
**PCT/AT2013/000056**

(87) Internationale Veröffentlichungsnummer:
**WO 2013/149275 (10.10.2013 Gazette 2013/41)**

(54) **VERFAHREN UND VORRICHTUNG ZUM REGELN EINER BELEUCHTUNGSSTÄRKE, MIT ADAPTIVEM REGELKREIS-FAKTOR**

METHOD AND DEVICE FOR REGULATING AN ILLUMINANCE USING AN ADAPTIVE CONTROL LOOP FACTOR

PROCÉDÉ ET DISPOSITIF DE RÉGLAGE D'INTENSITÉ D'ÉCLAIRAGE FAISANT INTERVENIR UN FACTEUR DE CIRCUIT DE RÉGLAGE ADAPTATIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.04.2012   DE 102012006860**

(43) Veröffentlichungstag der Anmeldung:
**11.02.2015   Patentblatt 2015/07**

(73) Patentinhaber: **Tridonic GmbH & Co. KG**
**6851 Dornbirn (AT)**

(72) Erfinder:
• **VOGT, Dominik**
**A-6850 Dornbirn (AT)**
• **SEJKORA, Günther**
**A-6867 Schwarzenberg (AT)**

(74) Vertreter: **Banzer, Hans-Jörg et al**
**Kraus & Weisert**
**Patentanwälte PartGmbB**
**Thomas-Wimmer-Ring 15**
**80539 München (DE)**

(56) Entgegenhaltungen:
**US-A1- 2005 110 416     US-A1- 2008 074 059**
**US-A1- 2011 089 842     US-A1- 2011 089 855**

**Beschreibung**

Die Erfindung betrifft ein Verfahren und eine Vorrichtung zum Regeln einer Beleuchtungsstärke. Die Erfindung betrifft insbesondere ein derartiges Verfahren und eine derartige Vorrichtung, mit dem bzw. mit der eine Annäherung an eine Sollbeleuchtungsstärke realisiert werden kann.

Eine Kunstlichtregelung findet in Beleuchtungssystemen Anwendung. Ziel der Kunstlichtregelung ist es, auch bei sich änderndem Fremdlichteinfluss konsistent eine Sollbeleuchtungsstärke zu erreichen. Beispielsweise soll die Beleuchtungsstärke auf einer Bezugsfläche, beispielsweise einer Arbeitsfläche eines Büros, auch bei variablem und unbekanntem Fremdlichteinfluss möglichst konstant gehalten werden. Dazu werden ein Regler, der von mindestens einem Lichtsensor die aktuelle Beleuchtungsstärke erhält, und eine Kunstbeleuchtung, mit der der Regler eine Änderung der Beleuchtungsstärke innerhalb der Grenzen der Kunstbeleuchtung ausgleichen kann, eingesetzt. Eine derartige Kunstlichtregelung kann beispielsweise in Lichtsteuersystemen verwendeten werden, die zur Innenraumbeleuchtung eingesetzt wird.

Herkömmliche Kunstlichtregelungen können so ausgestaltet sein, dass sie als Antwort auf eine Abweichung zwischen einem Ist-Wert und einem Sollwert einer von einem Sensor erfassten Beleuchtungsstärke in jedem Regelschritt ihr Stellglied um die kleinste mögliche Einheit ändern. Ein derartiger Ansatz führt in der Regel zu einer langsamen Annäherung an den Sollwert in mehreren Schritten. Ist die Differenz von Ist-Wert und Sollwert groß im Vergleich zum Inkrement des Stellglieds, das in jedem Regelschritt verwendet wird, kann die Zeitdauer, bis der Sollwert wieder erreicht ist, ebenfalls groß werden. Wird hingegen das Inkrement groß gewählt, um eine schnellere Annährung an den Sollwert zu erreichen, besteht die Gefahr eines "Überschwingens", bei dem ein Intervall akzeptabler Beleuchtungsstärken verfehlt wird und weitere Stellbefehle zum Ausgleichen erforderlich sind. Ein derartiges Überschwingen kann zu unerwünschten Schwankungen der Beleuchtungsstärke führen. Sowohl bei zu kleinen als auch bei zu großen Stellschritten können die geschilderten Szenarien dazu führen, dass eine große Anzahl von Stellbefehlen erzeugt werden muss. Dies kann zu einer unerwünschten Auslastung der verfügbaren Rechenleistung und/oder von Übertragungsbandbreiten für Stellbefehle führen. Letzteres stellt sich beispielsweise dann als problematisch dar, wenn die Stellbefehle als digitale Befehle über einen Bus, beispielsweise einen DALI-Bus übertragen werden.

Darüber hinaus werden sowohl eine zu langsame Anpassung der Beleuchtungsstärke als auch eine zu schnelle Änderung, insbesondere ein "Überschwingen", als störend empfunden.

Bekannt sind auch Regelungen, bei denen die Größe des Regelschritts in Abhängigkeit von der Differenz zwischen Ist- und Sollwert mithilfe eines oder mehrerer fester oder bei einer Initialisierung des Reglers fest eingestellter Parameter bestimmt wird. Auch solche Regler erreichen den Sollwert erst nach einer Reihe von Regelschritten, was wiederum zu einer langsamen Anpassung an den Sollwert oder zu "Überschwingen" führen kann.

Die WO 02/45478 A1 beschreibt Informationssysteme, bei denen eine Anpassung einer Beleuchtungsstärke abhängig vom Fremdlicht vorgenommen wird. Ein Inkrement bzw. Stellschritt wird dabei abhängig von der Differenz zwischen dem Ist-Wert und dem Sollwert festgelegt. Das für einen nachfolgenden Regelschritt gewählte Inkrement hängt nur vom Ist-Wert der Beleuchtungsstärke ab, der nach dem vorhergehenden Regelschritt ermittelt wird. Die möglichen Inkremente weisen fixe Werte auf. Dies kann zu Schwierigkeiten führen, wenn sich beispielsweise das Verhalten einer Leuchte aufgrund von Alterung ändert. Anpassungen an unterschiedliche Leuchten können arbeits- und kostenaufwändig sein, da entsprechende Wartungen vor Ort erforderlich werden können.

Die US 2008/074059 A1, die als Basis für den Oberbegriff der unabhängigen Patentansprüche dient, offenbart eine Beleuchtungsregelung, bei der die Verstärkung oder Zeitkonstante eines PID ("proportional-integral-derivative")-Reglers abhängig von der Anwesenheit von Sonnenlicht oder natürlichem Licht und Kunstlicht eingestellt wird.

Aufgabe der Erfindung ist, ein Verfahren und eine Vorrichtung zum Regeln eines Kunstlichteinflusses bereitzustellen, die das Risiko eines Kriech- oder Überschwingverhaltens verringern. Aufgabe der Erfindung ist, derartige Verfahren und Vorrichtungen bereitzustellen, die Anpassungen beispielsweise an unterschiedliche Leuchten oder an unterschiedliche Lichtströme mit zunehmender Alterung von Leuchten erleichtern, ohne dass hierfür eine separate Wartung am Regler durchgeführt werden muss.

Die Aufgabe wird gelöst durch ein Verfahren und eine Vorrichtung mit den in den unabhängigen Patentansprüchen angegebenen Merkmalen. Die abhängigen Patentansprüche definieren Weiterbildungen der Erfindung.

Bei Verfahren und Vorrichtungen nach Ausführungsbeispielen wird ein Einfluss einer Kunstbeleuchtung während der Kunstlichtregelung ermittelt. Es wird ein Regelparameter eingeführt, dessen Parameterwert jeweils nach Regelschritten angepasst werden kann. Der Parameterwert des Regelparameters kann Messwertunterschiede, die ein

Sensor zwischen ausgeschalteter Kunstbeleuchtung und maximalem Lichtstrom der Kunstbeleuchtung erfassen würde, abschätzen. Durch die automatische Anpassung des Parameterwerts des Regelparameters wird eine adaptive Regelung erreicht, die ein selbstlernendes Verhalten zeigt. Für jeden Regelschritt kann mit Hilfe des Regelparameters im Vornhinein abgeschätzt werden, wie sich die gemessene Beleuchtungsstärke ändern sollte. Diese Abschätzung kann mit dem Messwert, der im nächsten Messschritt nach dem Regelschritt ermittelt wird, verglichen werden. Bei einer Abweichung zwischen der Abschätzung für die neue Beleuchtungsstärke, die nach dem Regelschritt erwartet wird, und der dann tatsächlich auftretenden Beleuchtungsstärke nach dem Regelschritt kann der Parameterwert des Regelparameters angepasst werden. Dadurch kann ein sich veränderndes Verhalten einer Leuchte, beispielsweise aufgrund von Alterung, automatisch berücksichtigt werden, und/oder das Verfahren und die Vorrichtung können aufgrund ihres selbstlernenden Verhaltens bei Leuchten unterschiedlicher Bauart eingesetzt werden. Der nach einem Regelschritt ermittelte neue Parameterwert für den Regelparameter kann im nächsten Regelschritt verwendet werden, um das Stellglied im nächsten Regelschritt zu stellen.

Bei einem Verfahren zum Regeln einer Beleuchtungsstärke nach einem Ausführungsbeispiel wird ein Ist-Wert eines Sensors, der von der zu regelnden Beleuchtungsstärke abhängt und der auf einen Sollwert eingeregelt werden soll, ermittelt, und anschließend ein Regelschritt ausgeführt. In dem Regelschritt wird jeweils ein Stellschritt für eine Leuchte in Abhängigkeit von dem ermittelten Ist-Wert und einem Parameterwert eines Regelparameters bestimmt und ein abhängig von dem Stellschritt erzeugter Stellbefehl erzeugt, um die Leuchte zu stellen. Das Verfahren umfasst den Schritt eines automatischen Anpassens des Parameterwerts des Regelparameters nach wenigstens einem Regelschritt. Bei dem automatischen Anpassen wird ein neuer Parameterwert des Regelparameters abhängig von einem ersten Ist-Wert des Sensors, der vor dem entsprechenden Regelschritt ermittelt wird, und einem zweiten Ist-Wert des Sensors, der nach dem entsprechenden Regelschritt ermittelt wird, bestimmt. Der neue Parameterwert des Regelparameters wird für einen nachfolgenden Regelschritt verwendet.

Durch die Einführung des Regelparameters und dessen automatische Anpassung kann das Regelverfahren automatisch adaptiert werden. Dadurch können unterschiedliche Eigenschaften von Leuchte, aber auch unterschiedliche Reflexionseigenschaften der zu beleuchtenden Fläche berücksichtigt werden.

Der Schritt des automatischen Anpassens des Parameterwerts des Regelparameters muss nicht nach jedem Regelschritt durchgeführt werden. Der Schritt des automatischen Anpassens des Parameterwerts des Regelparameters kann selektiv abhängig davon durchgeführt werden, ob ein bestimmtes Anpasskriterium erfüllt ist.

Der Schritt des automatischen Anpassens des Parameterwerts des Regelparameters realisiert eine selbstlernende Korrekturprozedur, die den Regelparameter an die erzielten Regelergebnisse anpassen kann. So kann nach einer relativ kurzen Lernphase auch bei großen Stellwertsprüngen mit geringem Schwing- bzw. Kriechverhalten geregelt werden. Eine weitere Wirkung der selbstlernenden Anpassung ist, dass Lampenalterung und sogar Lampenausfälle kompensiert werden können und die Anlage weiterhin zuverlässig geregelt wird.

Das Verfahren kann eingesetzt werden, um die Beleuchtungsstärke auf einer Bezugsfläche, beispielsweise einer Arbeitsfläche eines Büros, zu regeln. Der Sensor erfasst die Beleuchtungsstärke auf der Bezugsfläche. Dazu kann der Sensor beispielsweise so angeordnet sein, dass er von der Bezugsfläche reflektiertes Licht empfängt.

In dem Regelschritt kann der Stellschritt abhängig von einer Differenz zwischen dem Sollwert und dem ermittelten Ist-Wert sowie abhängig von dem Regelparameter bestimmt werden. In dem Regelschritt kann der Stellschritt als Produkt aus der Differenz und einem Proportionalitätsfaktor, der von dem Regelparameter abhängt, bestimmt werden. Dadurch kann der Stellschritt groß gewählt werden, wenn ein großer Unterschied zwischen Soll- und Ist-Wert vorliegt, und klein, wenn nur ein kleiner Unterschied zwischen Soll- und Ist-Wert vorliegt. Der Stellschritt, der als Inkrement des Stellwerts des Stellglieds dient, hängt vom Parameterwert des Regelparameters bei dem entsprechenden Regelschritt ab. Da der Parameterwert adaptiert wird, verändert sich auch die Abhängigkeit des Stellschritts von der Differenz zwischen Sollwert und Ist-Wert. Dadurch kann berücksichtigt werden, dass ein vorgegebenes Inkrement des Stellwerts des Stellglieds abhängig von den Eigenschaften der Leuchte und, falls der Ist-Wert im Reflexionsmodus erfasst wird, abhängig von den Reflexionseigenschaften der Bezugsfläche unterschiedlichen Einfluss auf die durch den Stellschritt hervorgerufene Änderung des Ist-Werts aufweist. Derartige unterschiedliche Einflüsse werden durch den Regelparameter abgebildet und durch die automatische Anpassung an die Gegebenheiten des Beleuchtungssystems bzw. der Bezugsfläche automatisch angepasst.

Bei dem automatischen Anpassen kann der neue Parameterwert des Regelparameters abhängig von einer Differenz zwischen dem zweiten Ist-Wert und dem ersten Ist-Wert und abhängig von dem in dem entsprechenden Regelschritt ermittelten Stellschritt bestimmt werden. Der neue Parameterwert des Regelparameters kann weiterhin abhängig von wenigstens einem alten Parameterwert des Regelparameters bestimmt werden. Der neue Parameterwert des Regelparameters, der nach einem vorgegebenen Regelschritt gesetzt wird, kann abhängig von dem alten Parameterwert des Regelparameters, der bei dem vorgegebenen Regelschritt verwendet wurde, sowie abhängig von der Differenz zwischen dem zweiten Ist-Wert und dem ersten Ist-Wert und abhängig von dem in dem vorgegebenen Regelschritt ermittelten Stellschritt ermittelt werden.

Der Parameterwert des Regelparameters kann so angepasst werden, dass er einen Unterschied zwischen Ist-Werten des Sensors bei ausgeschalteter Leuchte und bei maximalem Lichtstrom der Leuchte abschätzt. Dies kann erreicht werden, ohne dass dazu die Leuchte über den vollen Helligkeitsbereich gefahren werden muss.

Bei dem Verfahren können zwischen zwei aufeinanderfolgenden Regelschritten mehrere Abfragen eines Sensors jeweils zum Ermitteln des Ist-Werts durchgeführt werden. Eine Anzahl der mehreren Abfragen, die vor dem Ausführen des zweiten Regelschritts der zwei aufeinanderfolgenden Regelschritte durchgeführt werden, kann von einer Differenz zwischen einem in wenigstens einer der mehreren Abfragen ermittelten Ist-Wert und dem Sollwert abhängen.

Mehrfache Wiederholungen von Abfragen des Ist-Werts des Sensors, die ohne nachfolgenden Regelschritt durchgeführt werden, können selektiv abgebrochen werden, sobald der in der letzten Abfrage erfasste Ist-Wert von dem Sollwert um mehr als einen Schwellenwert abweicht. Mehrfache Wiederholungen von Abfragen des Ist-Werts des Sensors, die ohne nachfolgenden Regelschritt durchgeführt werden, können auch nach einer maximalen Anzahl abgebrochen werden, um mit dem nächsten Regelschritt fortzufahren. Somit kann zwischen Regelschritten eine Unterschleife mehrfach durchlaufen werden, bei der nur der Ist-Wert vom Sensor abgefragt wird, aber nicht unmittelbar ein Regelschritt folgt. Die Unterschleife kann durchlaufen werden, bis eine maximale Anzahl von Unterschleifen erreicht oder in einer der Unterschleifen eine Abweichung zwischen Ist-Wert und Sollwert festgestellt wird, die einen Schwellenwert übersteigt.

Durch das selektive Durchlaufen einer vollständigen Regelschleife mit Messwerterfassung, Regelschritt und optionaler automatischer Anpassung des Parameterwerts des Regelparameters oder der Unterschleife kann der Rechenaufwand verringert werden. Die vollständige Regelschleife muss nur in größeren zeitlichen Abständen als aufeinanderfolgende Sensorabfragen durchlaufen werden. Durch ein Abbruchkriterium, das von der Differenz zwischen einem in einer Unterschleife erfassten Ist-Wert und dem Sollwert abhängt, kann ein Regelschritt dennoch zuverlässig eingeleitet werden, wenn größere Abweichungen zwischen Ist-Wert und Sollwert auftreten.

Die Unterschleife erlaubt auch, Änderungen des Fremdlichteinflusses zwischen zwei aufeinanderfolgenden Regelschritten zu überwachen. Informationen über die Änderung des Fremdlichteinflusses vor einem Regelschritt kann bei einer Entscheidung, ob nach dem Regelschritt eine automatische Anpassung des Parameterwerts des Regelparameters stattfinden soll, verwendet werden. Die Unterschleife erlaubt auch, dass der erste Ist-Wert und der zweite Ist-Wert, die vor bzw. nach einem Regelschritt erfasst werden und zur Anpassung des Parameterwerts des Regelparameters herangezogen werden, in einem zeitlichen Abstand ermittelt werden, der kleiner als ein zeitlicher Abstand zwischen Regelschritten ist. Dadurch kann die Güte der Anpassung des Parameterwerts erhöht werden.

Abhängig von den in den mehreren Abfragen des Sensors ermittelten Ist-Werten kann eine Änderung des Fremdlichteinflusses vor dem Ausführen des zweiten Regelschritts der zwei aufeinanderfolgenden Regelschritte abgeschätzt werden. Das automatische Anpassen des Parameterwerts des Regelparameters nach dem zweiten Regelschritt kann selektiv abhängig von einem Schwellenwertvergleich der Änderung des Fremdlichteinflusses durchgeführt werden.

Ein neuer Parameterwert des Regelparameters muss nicht nach jedem Regelschritt ermittelt werden. Nach einem Regelschritt kann eine Abweichung zwischen dem zweiten Ist-Wert, der nach dem Regelschritt ermittelt wird, und einer rechnerischen Abschätzung für den Ist-Wert, die abhängig von dem in dem Regelschritt verwendeten Parameterwert des Regelparameters bestimmt wird, ermittelt werden. Ein neuer Parameterwert des Regelparameters kann selektiv bestimmt werden in Abhängigkeit von der Abweichung. Der neue Parameterwert des Regelparameters kann dann bestimmt werden, wenn die Abweichung einen Schwellenwert übersteigt: Auf diese Weise kann eine zu häufige Anpassung des Parameterwerts beispielsweise bei Messrauschen unterdrückt werden.

Ein neuer Parameterwert des Regelparameters kann nach einem Regelschritt selektiv abhängig von einem Anpasskriterium ermittelt werden. Ein neuer Parameterwert des Regelparameters kann beispielsweise selektiv nur dann ermittelt werden, wenn der dem in dem Regelschritt ermittelte Stellschritt größer als oder wenigstens gleich einem Stellschritt-Schwellenwert ist.

Alternativ oder zusätzlich kann das Ermitteln eines neuen Parameterwerts des Regelparameters davon abhängig gemacht werden, dass seit Einschalten der Leuchte bis zu dem Regelschritt mindestens eine vorgegebene Zeitdauer vergangen ist. Dadurch kann eine Anpassung in Phasen, in denen sich das Verhalten der Leuchte noch transient ändern kann, unterdrückt werden.

Alternativ oder zusätzlich zu jeder der in den vorangegangenen Absätzen genannten Bedingungen kann das Ermitteln eines neuen Parameterwerts des Regelparameters davon abhängig gemacht werden, dass eine zeitliche Änderung eines Fremdlichteinflusses vor dem Regelschritt, nach dem die Anpassung möglicherweise durchgeführt werden soll, kleiner als ein weiterer Schwellenwert ist. Dadurch kann verhindert werden, dass sich rasch ändernde Fremdlichteinflüsse die Differenz zwischen dem zweitem IstWert, der nach dem Regelschritt erfasst wird, und dem ersten Ist-Wert, der vor dem Regelschritt erfasst wird, stark beeinflussen. Eine Verfälschung der Parameteranpassung aufgrund sich stark ändernder Fremdlichteinflüsse kann so vermieden werden.

Alternativ oder zusätzlich zu jeder der in den vorangegangenen Absätzen genannten Bedingungen kann das Ermitteln eines neuen Parameterwerts des Regelparameters davon abhängig gemacht werden, dass eine einer Differenz zwischen dem ersten IstWert, der vor dem Regelschritt ermittelt wird, und dem zweiten Ist-Wert, der nach dem Regelschritt ermittelt wird, größer ist als ein Messwert-Schwellenwert. Die Differenz zwischen dem ersten Ist-Wert, der vor dem Regelschritt ermittelt wird, und dem zweiten Ist-Wert, der nach dem Regelschritt ermittelt wird, kann durch den Sollwert dividiert und der so ermittelte Quotient mit einem weiteren Schwellenwert verglichen werden. Kleine Änderungen des Ist-Werts können durch Messschwankungen hervorgerufen werden. Durch das genannte Kriterium kann eine ständige Anpassung des Parameterwerts des Regelparameters als Reaktion auf Messschwankungen unterdrückt werden.

Der neue Parameterwert des Regelparameters kann nach einem Regelschritt jeweils in Abhängigkeit von

$$\frac{E_{Sensor}(n) - E_{Sensor}(v)}{\Delta I}$$

ermittelt werden. Dabei bezeichnet $E_{Sensor}(v)$ den ersten Ist-Wert, der vor dem entsprechenden Regelschritt ermittelt wird, $E_{Sensor}(n)$ den zweiten Ist-Wert, der nach dem entsprechenden Regelschritt ermittelt wird, und $\Delta I$ den in dem entsprechenden Regelschritt ermittelte Stellschritt.

Der neue Parameterwert des Regelparameters kann nach einem Regelschritt jeweils in Abhängigkeit von

$$(1-p) \cdot E_{Param}(alt) + p \cdot \frac{E_{Sensor}(n) - E_{Sensor}(v)}{\Delta I}$$

ermittelt werden. Dabei bezeichnet $E_{Param}(alt)$ den Parameterwert des Regelparameters, der in dem Regelschritt zum Ermitteln des Stellschritts verwendet wurde, und p ist eine reelle Zahl, die $0 \le p \le 1$ erfüllt.

Der neue Parameterwert des Regelparameters kann abhängig davon nach unterschiedlichen Prozeduren ermittelt werden, ob die Differenz zwischen dem ersten Ist-Wert und dem zweiten Ist-Wert zu einer Erhöhung oder Erniedrigung des Parameterwerts des Regelparameters führen wird. Der neue Parameterwert des Regelparameters abhängig davon, ob die Bedingung

$$\frac{E_{Sensor}(n) - E_{Sensor}(v)}{\Delta I} > E_{Param}(alt)$$

erfüllt ist, nach unterschiedlichen Prozeduren ermittelt werden.

In dem Regelschritt kann der Stellschritt abhängig von

$$\frac{E_{Soll} - E_{Sensor}(v)}{E_{Param}(alt)}$$

ermittelt werden, wobei $E_{Soll}$ der Sollwert ist. Dieser Quotient kann diskretisiert werden, falls nur diskrete bzw. digitale Stellwerte zulässig sind. Dabei kann der Quotient nach oben gerundet werden, um ein Unterschreiten der Sollbeleuchtungsstärke zu vermeiden.

Der neue Parameterwert des Regelparameters kann abhängig von einer vorgegebenen unteren Schranke und einer vorgegebenen oberen Schranke für den Parameterwert ermittelt werden. Der neue Parameterwert kann so gesetzt werden, dass er nicht kleiner als die untere Schranke und nicht größer als die obere Schranke ist.

Eine Vorrichtung zum Regeln einer Beleuchtungsstärke umfasst einen Eingang zum Empfangen eines Ist-Werts eines Sensors, der von der zu regelnden Beleuchtungsstärke abhängt und der auf einen Sollwert geregelt werden soll, und eine mit dem Eingang gekoppelte elektronische Recheneinrichtung. Die elektronische Recheneinrichtung ist eingerichtet, um einen Stellschritt für eine Leuchte in Abhängigkeit von dem Ist-Wert und einem Parameterwert eines Regelparameters zu bestimmen. Die elektronische Recheneinrichtung ist eingerichtet, um einen Stellbefehl abhängig von dem Stellschritt zu erzeugen. Die elektronische Recheneinrichtung ist eingerichtet, um einen neuen Parameterwert des Regelparameters abhängig von einem ersten Ist-Wert, der vor dem entsprechenden Regelschritt empfangen wird, und einem zweiten Ist-Wert, der nach dem entsprechenden Regelschritt ermittelt wird, zu bestimmen, und den neuen Parameterwert des Regelparameters für einen nachfolgenden Regelschritt zu verwenden.

Die Vorrichtung zum Regeln einer Beleuchtungsstärke kann einen Sensor umfassen, der mit dem Eingang gekoppelt und eingerichtet ist, um den Ist-Wert an den Eingang bereitzustellen. Der Sensor ist ein Lichtsensor. Die Vorrichtung kann eine Leuchte umfassen, die mit der elektronischen Steuereinrichtung gekoppelt und eingerichtet ist, um als Antwort auf den Stellbefehl eine abgegebene Lichtleistung gemäß dem Stellbefehl zu ändern.

Die elektronische Recheneinrichtung kann in ein Leuchtenmodul und/oder ein Betriebsgerät, beispielsweise ein Vorschaltgerät, der Leuchte integriert sein. Die Vorrichtung kann als intelligentes Leuchtenmodul ausgestaltet sein, bei der die elektronischen Recheneinrichtung, die Leuchte und der Sensor in einer Baueinheit zusammengefasst sind.

Die Vorrichtung kann auch als von der Leuchte und dem Sensor separates Kontrollgerät ausgestaltet sein. Die Vorrichtung kann als zentrales Kontrollgerät eines Beleuchtungssystems ausgestaltet sein, das den Stellbefehl über eine Schnittstelle an die Leuchte ausgibt. Die Schnittstelle kann mit einem Bus, beispielsweise einem DALI-Bus gekoppelt sein.

Ein Beleuchtungssystem kann mehrere Leuchten, mehrere den Leuchten zugeordnete Sensoren und die Vorrichtung zum Regeln der Beleuchtungsstärke umfassen. In diesem Fall kann pro Leuchte jeweils ein Regelparameter vorgesehen sein. Die Regelung der Beleuchtungsstärke kann für jede der Leuchten und zugeordneten Sensoren wie beschrieben durchgeführt werden, wobei für jede Leuchte der Parameterwert des dieser Leuchte zugeordneten Regelparameters abhängig von einer Differenz zwischen Ist-Werten angepasst werden kann, die vor und nach einem Regelschritt für diese Leuchte von dem dieser Leuchte zugeordneten Sensor erfasst werden.

Die Vorrichtung zum Regeln einer Beleuchtungsstärke kann zur Durchführung des Verfahrens nach den verschiedenen Ausführungsbeispielen ausgestaltet sein.

Weiterbildungen der Vorrichtung zum Regeln einer Beleuchtungsstärke und die damit jeweils erzielten Wirkungen entsprechen den Weiterbildungen des Verfahrens nach Ausführungsbeispielen.

Weitere Merkmale, Wirkungen und Funktionen von Ausführungsbeispielen der Erfindung werden aus der nachfolgenden detaillierten Beschreibung unter Bezugnahme auf die beigefügten Zeichnungen ersichtlich.

FIG. 1 ist eine schematische Darstellung eines Beleuchtungssystems mit einer Vorrichtung zum Regeln einer Beleuchtungsstärke nach einem Ausführungsbeispiel.

FIG. 2 zeigt schematisch eine Regelschleife, die bei Verfahren nach Ausführungsbeispielen durchlaufen werden kann.

FIG. 3 zeigt eine Unterschleife des Regelkreises, die bei Verfahren nach Ausführungsbeispielen zwischen Regelschritten mehrfach durchlaufen werden kann.

FIG. 4 ist ein Flussdiagramm eines Verfahrens nach einem Ausführungsbeispiel.

FIG. 5 veranschaulicht die Wirkungsweise von Regelschritten bei Verfahren nach Ausführungsbeispielen.

FIG. 6 veranschaulicht die Wirkungsweise von Regelschritten, falls ein Parameterwert eines Regelparameters noch nicht angepasst ist.

FIG. 7 illustriert eine Parameteranpassung bei Verfahren nach Ausführungsbeispielen, bei der ein Parameterwert eines Regelparameters adaptiv während des Regelkreislaufs angepasst wird.

FIG. 8 illustriert eine Implementierung einer Parameteranpassung bei Verfahren nach Ausführungsbeispielen.

FIG. 9 illustriert eine Implementierung einer Parameteranpassung bei Verfahren nach Ausführungsbeispielen.

FIG. 10 ist ein Flussdiagramm eines Verfahrens nach einem Ausführungsbeispiel.

FIG. 11 ist eine schematische Darstellung eines Beleuchtungssystems mit einer Vorrichtung zum Regeln einer Beleuchtungsstärke nach einem Ausführungsbeispiel.

FIG. 12 ist eine schematische Darstellung eines Beleuchtungssystems mit mehreren Vorrichtungen zum Regeln einer Beleuchtungsstärke nach einem Ausführungsbeispiel.

In den Figuren bezeichnen identische oder ähnliche Bezugszeichen identische oder ähnliche Einheiten oder Komponenten. Die Merkmale der verschiedenen Ausführungsbeispiele können miteinander kombiniert werden, sofern dies in der folgenden Beschreibung nicht ausdrücklich ausgeschlossen ist.

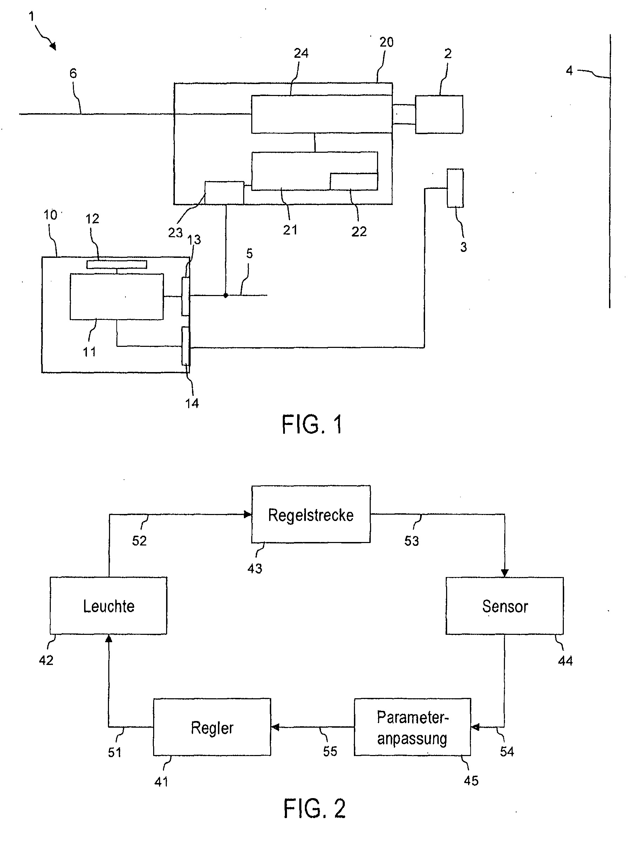

FIG. 1 zeigt ein Beleuchtungssystem 1 mit einer Vorrichtung 10 zum Regeln einer Beleuchtungsstärke nach einem Ausführungsbeispiel. Das Beleuchtungssystem 1 umfasst eine Leuchte 2. Die Leuchte 2 kann beispielsweise eine Gasentladungslampe oder eine LED-basierte Leuchte sein. Das Beleuchtungssystem 1 kann weitere Leuchten umfassen. Der Leuchte 2 kann ein Betriebsgerät 20 für die Leuchte 2 zugeordnet sein. Die Leuchte 2 leuchtet im Betrieb eine Bezugsfläche 4 aus. Die Beleuchtungsstärke der Bezugsfläche 4 soll geregelt werden. Dadurch soll eine vorgegebene Beleuchtungsstärke auch bei veränderlichen Fremdlichteinflüssen, bei denen andere Lichtquellen als die Leuchte 2 ebenfalls Licht auf die Bezugsfläche 4 einstrahlen, erreicht werden.

Das Beleuchtungssystem 1 umfasst einen Sensor 3, der als Lichtsensor ausgestaltet ist. Der Sensor 3 ist so angeordnet und ausgestaltet, dass er von der Bezugsfläche 4 reflektiertes und/oder gestreutes Licht erfasst. Die Bezugsfläche 4 ist im Erfassungsbereich des Sensors 3 enthalten. Der Sensor 3 kann beispielsweise in derselben Ebene wie die Leuchte 2 montiert sein. Wie noch ausführlich beschrieben wird, ist die Vorrichtung 10 als Regler ausgestaltet, der in Regelschritten jeweils einen Stellbefehl an die Leuchte 2 bzw. an das der Leuchte 2 zugeordneten Betriebsgerät ausgibt. Die Stellbefehle werden in den Regelschritten abhängig von einem mit dem Sensor 3 erfassten Ist-Wert erzeugt. Bei der Ermittlung eines Stellschritts wird nicht nur der mit dem Sensor 3 erfassten Ist-Wert und der Sollwert berücksichtigt, sondern auch ein Parameterwert eines Regelparameters. Der Parameterwert wird wenigstens nach einigen der sequentiell ausgeführten Regelschritte aktualisiert. Dazu wird beobachtet, wie sich ein Stellschritt, um den das Stellglied in einem Regelschritt gestellt wird, auf den mit dem Sensor 3 erfassten Ist-Wert auswirkt. Abhängig von einem Vergleich von vor und nach dem Regelschritt mit dem Sensor 3 erfassten Ist-Werten kann der Parameterwert des Regelparameters angepasst werden. Der neue, angepasste Parameterwert kann im nächsten Regelschritt zur Bestimmung des Stellschritts verwendet werden.

Durch die Einführung eines Regelparameters mit veränderbarem Parameterwert und die Anpassung des Parameterwerts des Regelparameters kann eine selbstlernende Anpassung der Vorrichtung 10 an die Gegebenheiten des Beleuchtungssystems 1 erfolgen. Der Regelparameter kann so definiert sein, dass er den Einfluss einer Änderung des Stellwerts der Leuchte 2 auf den Ist-Wert, der mit dem Sensor 3 als Reaktion auf den Regelschritt erfasst wird, quantifiziert. Dieser Einfluss kann in realen Systemen veränderlich sein, beispielsweise aufgrund von sich ändernden Reflexionseigenschaften der Bezugsfläche 4, aufgrund einer Alterung der Leuchte 2, bei Einbau einer neuen Leuchte 2 als Ersatz für eine alte Leuchte, oder aufgrund eines teilweisen Ausfalls der Leuchte 2. Derartige Änderungen können durch die selbstlernende, adaptive Anpassung des Parameterwerts des Regelparameters berücksichtigt werden, ohne dass dafür eine Wartung vor Ort erforderlich ist. Das Risiko von Kriech- oder Überschwingverhalten bei der Regelung der Beleuchtungsstärke kann verringert werden, selbst wenn sich der Einfluss ändert, den eine Änderung des Stellwerts der Leuchte 2 auf den Ist-Wert hat, der mit dem Sensor 3 als Reaktion auf den Regelschritt erfasst wird.

Die Leuchte 2 ist so ausgestaltet, dass eine abgestrahlte Lichtleistung abhängig von einem empfangenen Stellbefehl veränderlich ist. Dazu kann beispielsweise das Betriebsgerät 20 vorgesehen sein, das Stellbefehle empfängt und umsetzt. Das Betriebsgerät 20 kann als Vorschaltgerät ausgestaltet sein. Der Betrieb des Betriebsgeräts 20 erfolgt auf Basis von Stellbefehlen, die das Betriebsgerät 20 von der Vorrichtung 10 erhält. Das Betriebsgerät 20 weist eine Schnittstelle 23 auf, über die eine Datenkommunikation mit der Vorrichtung 10 erfolgen kann. Die Datenkommunikation kann drahtgebunden, beispielsweise über einen Bus 5, oder drahtlos erfolgen. Die Datenkommunikation kann eine digitale Datenkommunikation sein. Der Bus 5 kann ein DALI-Bus sein, und Befehle können gemäß dem DALI-Standard erzeugt werden. Weitere Betriebsgeräte können an den Bus 5 angeschlossen sein. Von der Schnittstelle 23 empfangene Befehle werden von einer Steuereinrichtung 21 verarbeitet, die den Betrieb des Betriebsgeräts 20 abhängig von dem empfangenen Befehl kontrolliert. Dabei kann beispielsweise ein Überblendvorgang erfolgen, bei dem der neue Stellwert mit einer Überblendzeit, die in einem Speicher 22 abgelegt oder in dem Stellbefehl enthalten sein kann, angefahren wird.

Das Betriebsgerät 20 kann so ausgestaltet sein, dass es eine Intensitätssteuerung der Leuchte 2 erlaubt. Das Betriebsgerät 20 wird über eine Versorgungsleitung bzw. Versorgungsleitungen 6 mit Energie gespeist. Das Betriebsgerät 20 weist eine Schaltung 24 auf, um die Leuchte 2 mit Energie zu versorgen. Die der Leuchte 2 zugeführte Leistung und somit die von der Leuchte 2 abgegebene Lichtleistung kann über die Schaltung 24 auf verschiedene Weisen kontrolliert werden. Die in das Betriebsgerät 20 integrierte Steuereinrichtung 21 kontrolliert die Schaltung 24 abhängig von einem empfangenen Stellbefehl, um den Stellbefehl umzusetzen. Der Stellbefehl, der von der Vorrichtung 10 erzeugt wird, um die Leuchte 2 zu stellen, kann beispielsweise einen absoluten Stellwert enthalten. Die Leuchte 2 oder das der Leuchte zugeordnete Betriebsgerät 20 setzt den Stellbefehl entsprechend um, so dass die Leuchte 2 als Stellglied auf den gewünschten Stellwert gestellt wird.

Die Vorrichtung 10 weist einen Signaleingang 14 auf, um den Ist-Wert der von dem Sensor erfassten Beleuchtungsstärke abzufragen. Die Vorrichtung 10 kann eine Schnittstelle 13 zum Ausgeben von Stellbefehlen aufweisen. Falls die Vorrichtung 10 in einer baulichen Einheit mit der Leuchte 2 kombiniert ist, muss die Schnittstelle 13 keine externe Schnittstelle sein. Ähnlich muss der Signaleingang 14 kein externer Anschluss sein, falls die Vorrichtung 10 in einer baulichen Einheit mit dem Sensor 3 kombiniert ist. Der Signaleingang 14 und die Schnittstelle 13 können in einer einzigen Schnittstelle kombiniert sein, falls auch der Sensor Ist-Werte über den Bus 5 überträgt.

Die Vorrichtung 10 weist eine elektronische Recheneinrichtung 11 auf. Die elektronische Recheneinrichtung 11 kann einen oder mehrere Prozessoren umfassen. Die elektronische Recheneinrichtung 11 kann so ausgestaltet sein, dass sie abhängig von einem Vergleich zwischen Ist-Wert des Sensors und Sollwert, auf den die Beleuchtungsstärke eingeregelt werden soll, einen Stellschritt ermittelt, um den der Stellwert der Leuchte 2 verändert werden soll. Die elektronische Recheneinrichtung 11 erzeugt den entsprechenden Stellbefehl für die Leuchte 2 in einem Regelschritt. Die elektronische Recheneinrichtung 11 kann so ausgestaltet sein, dass sie weiterhin eine Anpassung des Parameterwerts des Regelparameters durchführt, wie noch ausführlicher beschrieben werden wird. Die verschiedenen Schritte, die die elektronische Recheneinrichtung 11 zur Regelung der Beleuchtungsstärke und zur automatischen Parameteranpassung durchführt, können in Hardware, Software, Firmware oder Kombination daraus realisiert sein. Beispielsweise kann die elektronische Recheneinrichtung 11 einen Prozessor umfassen, der in einem Speicher 12 abgelegten Befehlscode abarbeitet, um die Verfahren nach verschiedenen Ausführungsbeispielen auszuführen.

Die Funktionsweise der Vorrichtung 10 wird unter Bezugnahme auf FIG. 2-10 näher beschrieben. Während in FIG. 1 schematisch nur eine Leuchte 2 und ein der Leuchte 2 zugeordneter Sensor 3 dargestellt ist, können die Verfahren und Vorrichtungen zum Regeln einer Beleuchtungsstärke entsprechend auch in einem Beleuchtungssystem 1 mit mehreren Leuchten eingesetzt werden. Die Anpassung des Parameterwerts eines Regelparameters, die nachfolgend noch näher beschrieben werden wird, kann in diesem Fall separat für jede der mehreren Leuchten mit den beschriebenen Methoden vorgenommen werden. Ähnlich kann die Ermittlung eines neuen Stellwerts und die Erzeugung eines Stellbefehls in einem Regelschritt separat für jede der mehreren Leuchten mit den beschriebenen Methoden vorgenommen werden.

In einem Regelschritt bestimmt die Vorrichtung 10 jeweils auf Basis einer Abweichung zwischen Sollwert und Ist-Wert eine Stellwertkorrektur, die an die Leuchte bzw. deren Betriebsgerät weitergegeben wird. Dabei können Stellbefehle mit absoluten Stellwerten erzeugt werden, wobei die Änderung des Stellwerts den Stellschritt repräsentiert. Alternativ können auch Stellbefehle mit inkrementalen Änderungen des Stellwerts erzeugt werden. Der Stellschritt, der zur Ermittlung des neuen absoluten Stellwerts erzeugt wird, hängt nicht nur von der Abweichung zwischen Sollwert und Ist-Wert, sondern auch von dem Parameterwert des Regelparameters ab.

Der Parameterwert wird von der Vorrichtung 10 automatisch angepasst. Die entsprechende Parameteranpassung dient als selbstlernende Korrekturprozedur, die den Parameterwert des Regelparameters an die erzielten Regelergebnisse anpasst.

FIG. 2 zeigt schematisch eine Regelschleife, die bei Verfahren nach Ausführungsbeispielen durchlaufen werden kann. Die Vorrichtung 10 dient dabei als Regler 41, der auch die Funktion einer Parameteranpassung 45 ausführt.

Der Regler 41 erzeugt einen Stellbefehl 51 für eine Leuchte 42, die als Stellglied dient. Der Stellbefehl 51 kann den neuen absoluten Stellwert beinhalten. Zur Durchführung eines Regelschritts ermittelt der Regler 41 einen Stellschritt für die Leuchte 42 in Abhängigkeit von der Abweichung zwischen Sollwert und Ist-Wert und in Abhängigkeit von dem Parameterwert des Regelparameters. Der Regelparameter kann einen Proportionalitätsfaktor bestimmen, den der Regler 41 verwendet, um die Abweichung zwischen Sollwert und Ist-Wert in einen Stellschritt umzurechnen, der in dem Regelschritt bestimmt wird.

Die Lichtabgabe der Leuchte 42 wird entsprechend dem Stellbefehl verändert. Dies kann in einem Überblendvorgang erfolgen. Die Änderung der Einstellung wirkt bei 52 auf die Regelstrecke 43, d.h. auf die Beleuchtung im Raum. Das Messglied, das als Sensor 44 ausgestaltet ist, erfasst bei 53 die Einwirkung auf die Regelstrecke 43.

Der Sensor 44 liefert bei 54 einen neuen Ist-Wert. Der neue Ist-Wert, der von dem Sensor 44 erfasst wird, wird bei einer Parameteranpassung 45 verwendet. Dabei kann abhängig von dem neuen Ist-Wert bestimmt werden, ob der Parameterwert des Regelparameters geändert werden soll. Falls der Parameterwert des Regelparameters geändert werden soll, wird ein neuer Wert des Regelparameters bestimmt. Der neue Parameterwert des Regelparameters wird vom Regler 41 beim nachfolgenden Regelschritt verwendet, wie schematisch bei 55 dargestellt.

Die Parameteranpassung 45 kann abhängig von einem Vergleich einer aufgrund der Stellwertvorgabe prognostizierten Veränderung des Ist-Werts mit der tatsächlich eingetretenen Veränderung des Ist-Werts bestimmt werden. Weicht die rechnerisch ermittelte prognostizierten Veränderung des Ist-Werts von der tatsächlich eingetretenen Veränderung des Ist-Werts um mehr als eine akzeptable Abweichung ab, wird typischerweise eine automatische Anpassung des Parameterwerts des Regelparameters vorgenommen. Es können zusätzliche Anpasskriterien überprüft werden, um eine Anpassung des Parameterwerts des Regelparameters unter bestimmten Bedingungen zu unterbinden bzw. selektiv nur dann durchzuführen, wenn das Anpasskriterium erfüllt ist.

Das Anpasskriterium kann beispielsweise sicherstellen, dass eine Anpassung des Parameterwerts des Regelparameters nicht vorgenommen wird, wenn sich nach dem letzten Regelschritt und vor Durchführung des nächsten Regelschritts der Ist-Wert, der von dem Sensor 44 erfasst wird, signifikant ändert. Dies lässt auf eine starke Änderung des Fremdlichteinflusses schließen, die die Güte der Anpassung des Parameterwerts des Regelparameters beeinträchtigen könnte.

Um sich verändernde Fremdlichteinflüsse zwischen zwei aufeinanderfolgenden Regelschritten zu erkennen, kann vor einem erneuten Durchlaufen der in FIG. 2 dargestellten Regelschleife eine Unterschleife einmal oder mehrfach durchlaufen werden, in der nur der Ist-Wert des Sensors mehrfach abgefragt und überwacht wird, aber weder ein Regelschritt noch eine Parameteranpassung durchgeführt wird.

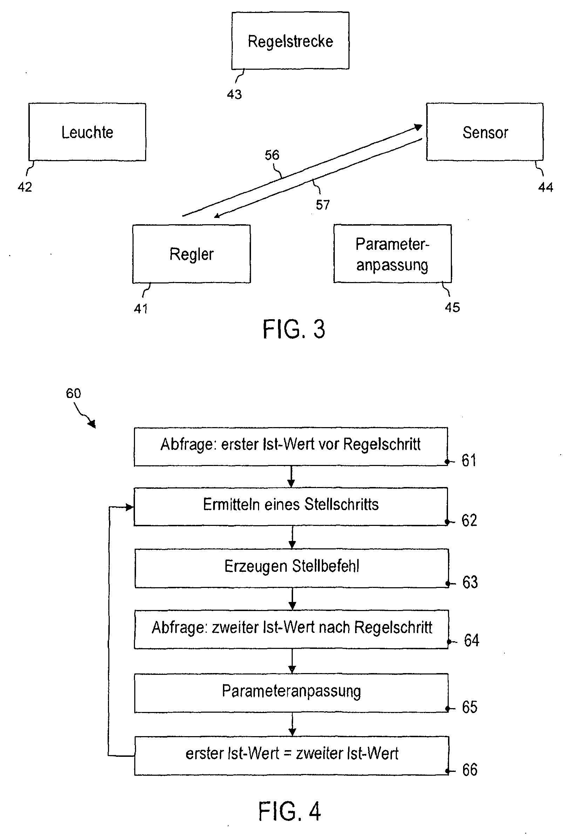

FIG. 3 zeigt eine derartige Unterschleife, die zwischen aufeinanderfolgenden Regelschritten einmal oder mehrfach durchgeführt werden kann.

Dabei wird der Ist-Wert des Sensors 44 bei 56 abgefragt. Der bei 57 übermittelte Ist-Wert des Sensors 44 wird überwacht. Es muss nicht nach jeder Abfrage eines Ist-Werts ein Regelschritt durchgeführt werden. Spätestens nach einer Maximalanzahl von aufeinanderfolgenden Abfragen ohne nachfolgenden Regelschritt kann erneut ein Regelschritt durchgeführt und dazu die Unterschleife verlassen werden, um die in FIG. 2 dargestellte volle Regelschleife zu durchlaufen. Beispielsweise können zwischen zwei aufeinanderfolgenden Regelschritten bis zu fünf Abfragen des Ist-Werts durchgeführt werden, ohne dass zwischen diesen jeweils ein Regelschritt und eine Parameteranpassung ausgeführt wird.

Zum Überwachen des Ist-Werts des Sensors 44 kann beispielsweise nach jeder Abfrage die Abweichung des ermittelten Ist-Werts des Sensors vom Sollwert bestimmt werden. Diese Abweichung wird bezeichnet als

$$\Delta E = E_{Soll} - E_{Sensor} , \qquad (1)$$

wobei $E_{Soll}$ den Sollwert und $E_{Sensor}$ den vom Sensor erfassten Ist-Wert bezeichnet.

Sobald erkannt wird, dass die Bedingung

$$\left|\Delta E\right| > \Delta E_{max} \qquad (2)$$

erfüllt ist, kann die in FIG. 3 dargestellte Unterschleife verlassen werden und ein Regelschritt durchgeführt werden. Dabei bezeichnet $\Delta E_{max}$ einen vorgegebenen Schwellenwert, der das Abbruchkriterium für aufeinanderfolgende Unterschleifen definiert.

Aus den Ist-Werten, die bei aufeinanderfolgenden Abfragen des Ist-Werts zwischen zwei Regelschritten ermittelt werden, kann eine Veränderung des Fremdlichteinflusses abgeschätzt werden. Die Abschätzung für die Veränderung des Fremdlichteinflusses kann verwendet werden, um bei dem nachfolgenden Durchlaufen der vollen Regelschleife von FIG. 2 zu bestimmen, ob bei der Parameteranpassung 45 ein neuer Parameterwert des Regelparameters bestimmt werden soll.

Die in FIG. 3 dargestellte Unterschleife kann bei Verfahren und Vorrichtungen von Ausführungsbeispielen zwischen Regelschritten durchlaufen werden, kann aber auch in abgewandelter Form implementiert oder weggelassen werden.

Unter erneuter Bezugnahme auf FIG. 2 kann bei einem Regelschritt, den der Regler 41 durchführt, ein Stellschritt $\Delta I$ jeweils abhängig von

$$\Delta I = \frac{E_{Soll} - E_{Sensor}(v)}{E_{Param}(alt)} \qquad (3)$$

ermittelt werden, wobei $E_{Soll}$ der Sollwert und $E_{Sensor}(v)$ ein vor dem Regelschritt ermittelter Ist-Wert ist. Die Größe $E_{Param}(alt)$ bezeichnet den Parameterwert des Regelparameters, der im Regelschritt noch vor einer dem Regelschritt nachfolgenden Anpassung des Parameterwerts verwendet wird. Die Größe $E_{Param}(alt)$ wurde nach einem der Regelschritt vorangehenden Regelschritt für den gerade ausgeführten Regelschritt bestimmt. Der Ist-Wert $E_{Sensor}(v)$, der vor dem Regelschritt ermittelt wird, kann der letzte vor dem Regelschritt abgefragte Ist-Wert sein. Dieser aktuellste Ist-Wert kann bei einem vorhergehenden Durchlauf der vollen Regelschleife, wie in FIG. 2 dargestellt, oder bei einem Durchlauf der Unterschleife, wie in FIG. 3 dargestellt, ermittelt worden sein.

Der Parameterwert des Regelparameters $E_{Param}(alt)$, der in Gleichung (3) eingeht, bestimmt den Proportionalitätsfaktor zwischen Stellschritt und Abweichung zwischen Sollwert und Ist-Wert. Der Regelparameter $E_{Param}(alt)$, der in Gleichung (3) eingeht, stellt eine Abschätzung für die Änderung der Ist-Werte dar, die von dem Sensor bei maximaler Leistung der Leuchte und bei ausgeschalteter Leuchte ermittelt werden würden.

Ein neuer Stellwert für die Leuchte 2 kann aus dem alten Stellwert $I_{real}(alt)$ vor Durchführung des Regelschritts und dem in Gleichung (3) angegebenen Stellschritt bestimmt werden. Dies kann auf verschiedene Weisen geschehen. Beispielsweise kann zunächst ein Wert

$$I_{soll} = I_{real}(alt) + \frac{E_{Soll} - E_{Sensor}(v)}{E_{Param}(alt)} \qquad (4)$$

berechnet werden. Zur Festlegung des neuen Stellwerts können verschiedene zusätzliche Schritte vorgenommen werden. Beispielsweise kann ein Vergleich mit einem zulässigen Wertebereich von Stellwerten vorgenommen werden, um sicherzustellen, dass der neue Stellwert in dem zulässigen Wertebereich liegt.

Ein neuer Stellwert, der der Leuchte im Regelschritt übermittelt wird, kann beispielsweise bestimmt werden als

$$I_{real}(neu) = \begin{cases} I_{max} & falls \ I_{soll} > I_{max} \\ I_{soll} & falls \ I_{min} \leq I_{soll} \leq I_{max} \\ I_{min} & falls \ I_{soll} > I_{max} \end{cases} . \qquad (5)$$

Es kann eine Diskretisierung bzw. Digitalisierung der Größe $I_{real}$(neu) vorgenommen werden, falls nur diskrete bzw. digitale Stellwerte zulässig sind.

Nach dem Regelschritt wird ein weiterer Ist-Wert des Sensors abgefragt. Dieser wird im Folgenden mit $E_{Sensor}$(n) bezeichnet. Der Ist-Wert $E_{Sensor}$(n), der nach dem Regelschritt ermittelt wird, kann der erste nach dem Regelschritt abgefragte Ist-Wert sein. Dieser Ist-Wert kann bei einem Durchlauf der vollen Regelschleife, wie in FIG. 2 dargestellt, oder bei einem Durchlaufen der Unterschleife, wie in FIG. 3 dargestellt, ermittelt werden. Falls die Leuchte 2 den neuen Stellwert in einem Überblendvorgang anfährt, kann der Ist-Wert $E_{Sensor}$(n) nach Abschluss des Überblendvorgangs abgefragt werden.

Der Ist-Wert $E_{Sensor}$(n), der nach dem Regelschritt ermittelt wird, kann mit einer Abschätzung für den Ist-Wert, der als Reaktion auf den Regelschritt erwartet wird, verglichen werden. Eine derartige Abschätzung $E_{Sensor}$(erw) kann berechnet werden als

$$E_{Sensor}(erw) = E_{Sensor}(v) + \Delta I \cdot E_{Param}(alt) . \qquad (6)$$

Abhängig von der Differenz zwischen dem tatsächlichen Ist-Wert $E_{Sensor}$(n) und der Abschätzung $E_{Sensor}$(erw) kann eine Parameteranpassung durchgeführt werden, bei der ein neuer Parameterwert des Regelparameters bestimmt wird.

Die Parameteranpassung kann auf unterschiedliche Weisen ausgeführt werden. Der neue Parameterwert des Regelparameters kann dabei abhängig von

$$\frac{E_{Sensor}(n) - E_{Sensor}(v)}{\Delta I} \qquad (7)$$

ermittelt werden, wobei $\Delta I$ denjenigen Stellschritt bezeichnet, der in dem Regelschritt bestimmt wurde, vor dem der Ist-Wert $E_{Sensor}$(v) ermittelt wurde und nach dem der Ist-Wert $E_{Sensor}$(n) ermittelt wurde.

Bei einer Ausgestaltung von Vorrichtungen und Verfahren kann der neue Parameterwert $E_{Param}$(neu) des Regelparameters nach einem Regelschritt berechnet werden als

$$E_{Param}(neu) = (1 - p) \cdot E_{Param}(alt) + p \cdot \frac{E_{Sensor}(n) - E_{Sensor}(v)}{\Delta I} , \qquad (8)$$

wobei $E_{Param}$(alt) der Parameterwert des Regelparameters ist, der in dem Regelschritt zum Ermitteln des Stellschritts $\Delta I$ verwendet wurde, und p eine reelle Zahl ist, die $0 \leq p \leq 1$ erfüllt. Insbesondere kann der neue Parameterwert $E_{Param}$(neu) des Regelparameters gemäß Gleichung (8) bestimmt werden, wobei $0 < p < 1$ erfüllt ist.

Bei einer weiteren Ausgestaltung von Vorrichtungen und Verfahren kann der neue Parameterwert $E_{Param}$(neu) des Regelparameters nach einem Regelschritt abhängig davon, ob die Differenz zwischen dem ersten Ist-Wert und dem zweiten Ist-Wert zu einer Erhöhung oder Erniedrigung des Parameterwerts des Regelparameters führen wird, nach unterschiedlichen Prozeduren ermittelt werden. Der neue Parameterwert des Regelparameters kann bestimmt werden als

$$E_{Param}(neu) = (1 - q) \cdot E_{Param}(alt) + q \cdot \frac{E_{Sensor}(n) - E_{Sensor}(v)}{\Delta I} , \qquad (9)$$

falls die Bedingung

$$\frac{E_{Sensor}(n) - E_{Sensor}(v)}{\Delta I} > E_{Param}(alt) \qquad (10)$$

erfüllt ist. Der neue Parameterwert des Regelparameters kann bestimmt werden als

$$E_{Param}(neu) = (1-p) \cdot E_{Param}(alt) + p \cdot \frac{E_{Sensor}(n) - E_{Sensor}(v)}{\Delta I}, \qquad (11)$$

falls die Bedingung

$$\frac{E_{Sensor}(n) - E_{Sensor}(v)}{\Delta I} \le E_{Param}(alt) \qquad (12)$$

erfüllt ist. q ist ähnlich wie p eine reelle Zahl.

Bei einer weiteren Ausgestaltung kann der nach Gleichung (8) oder der nach Gleichungen (9)-(12) ermittelte neue Parameterwert $E_{Param}(neu)$ des Regelparameters so korrigiert werden, dass er innerhalb eines vorgegebenen Wertebereichs liegt. Dazu kann beispielsweise der neue Parameterwert $E_{Param}(neu)$ des Regelparameters auf einen Wert $E_{Param}(max)$ gesetzt werden, falls der nach Gleichung (8) oder der nach Gleichungen (9)-(12) ermittelte neue Parameterwert $E_{Param}(neu)$ größer als $E_{Param}(max)$ ist. Der neue Parameterwert $E_{Param}(neu)$ des Regelparameters kann auf einen Wert $E_{Param}(min)$ gesetzt werden, falls der nach Gleichung (8) oder der nach Gleichungen (9)-(12) ermittelte neue Parameterwert $E_{Param}(neu)$ kleiner als $E_{Param}(min)$ ist. In allen anderen Fällen kann der nach Gleichung (8) oder der nach Gleichungen (9)-(12) ermittelte neue Parameterwert $E_{Param}(neu)$ beibehalten werden.

Falls nur diskrete Werte für den neuen Parameterwert $E_{Param}(neu)$ zugelassen sind, kann der so ermittelte neue Parameterwert $E_{Param}(neu)$ so diskretisiert werden, dass er einen der zulässigen diskreten Werte aufweist.

Beim nächsten Durchlaufen einer Regelschleife, wie sie in FIG. 2 dargestellt ist, wird der nach dem Regelschritt ermittelte neue Parameterwert $E_{Param}(neu)$ verwendet, um den Stellschritt im darauffolgenden Regelschritt zu bestimmen. In der Terminologie der obigen Gleichungen (3)-(12) wird dazu für den darauffolgenden Regelschritt zunächst

$$E_{Param}(alt - n\ddot{a}chster\ Schritt) = E_{Param}(neu) \qquad (13)$$

gesetzt, um zu erreichen, dass der beim nächsten Regelschritt verwendete "alte" Parameterwert des Regelparameters auf der linken Seite von Gleichung (13) den im früheren Regelschritt als "neuen" Parameterwert des Regelparameters bestimmten Wert annimmt, der auf der rechten Seite von Gleichung (13) steht. Der Regelschritt und die Anpassung des Parameterwerts des Regelparameters kann dann erneut wie unter Bezugnahme auf Gleichungen (3)-(12) beschrieben durchgeführt werden.

FIG. 4 ist ein Flussdiagramm eines Verfahrens 60 nach einem Ausführungsbeispiel. Das Verfahren 60 kann von der Vorrichtung 10 des Beleuchtungssystems 1 automatisch ausgeführt werden. Das Verfahren 60 beinhaltet eine Regelung einer Beleuchtungsstärke abhängig von der Abweichung zwischen Ist-Wert eines Sensors und Sollwert und abhängig von einem Parameterwert eines Regelparameters. Das Verfahren 60 beinhaltet weiterhin eine Parameteranpassung, in der der Parameterwert des Regelparameters jedenfalls nach einigen der Regelschritte angepasst werden kann.

Bei 61 wird ein erster Ist-Wert eines Sensors vor Durchführung eines Regelschritts abgefragt.

Bei 62 wird ein Stellschritt ermittelt, um den der Stellwert der Leuchte geändert werden soll. Der Stellschritt kann abhängig von der Abweichung zwischen dem ersten Ist-Wert des Sensors und dem Sollwert bestimmt werden. Der Stellschritt kann als Produkt aus der Abweichung und einem Proportionalitätsfaktor bestimmt werden, der vom Parameterwert des Regelparameters abhängt. Der Proportionalitätsfaktor kann das Inverse des Parameterwerts des Regelparameters sein.

Bei 63 wird ein Stellbefehl abhängig von dem ermittelten Stellschritt erzeugt. Der Stellbefehl kann einen neuen Stellwert enthalten oder den neuen Stellwert anderweitig anzeigen. Der neue Stellwert kann wie unter Bezugnahme auf Gleichungen (4) und (5) beschrieben ermittelt werden. Der neue Stellwert kann so erzeugt werden, dass er aus einem zulässigen Wertebereich für Stellwerte ausgewählt ist.

Bei 64 wird ein zweiter Ist-Wert des Sensors abgefragt, nachdem der Stellbefehl erzeugt und von der Leuchte umgesetzt wurde. Falls die Leuchte einen Überblendvorgang fährt, kann der zweite Ist-Wert nach dem Ende des Überblendvorgangs abgefragt werden. Dazu kann beispielsweise ein Zeitabstand zwischen Abfragen von Ist-Werten des Sensors größer gewählt werden als die Überblendzeit.

Bei 65 wird eine Prozedur zur Parameteranpassung eingeleitet. Die Prozedur kann die Überprüfung eines Anpasskriteriums umfassen, um zu ermitteln, ob nach dem bei 62 und 63 ausgeführten Regelschritt eine Anpassung des Parameterwerts des Regelparameters erfolgen soll. Die Prozedur zur Parameteranpassung kann wenigstens nach einigen der Regelschritten eine Änderung des Parameterwerts des Regelparameters von einem alten Parameterwert, der beim vorangegangenen Regelschritt bei 62 und 63 verwendet wurde, auf einen neuen Parameterwert, der beim nachfolgenden Regelschritt verwendet werden soll, umfassen.

Die Verfahrensschritte 61-65 können dann erneut durchlaufen werden. Der bei 64 nach dem Regelschritt abgefragte zweite Ist-Wert des Sensors kann zur Stellwertberechnung beim darauffolgenden Regelschritt verwendet werden. Dazu kann bei 66 der bei 64 ermittelte zweite Ist-Wert entsprechend in ein Wertefeld für den Ist-Wert kopiert werden, der zur Ermittlung des nächsten Stellschritts verwendet wird. Alternativ oder zusätzlich können zwischen aufeinanderfolgenden Regelschritten mehrere Sensorabfragen durchgeführt werden, auf die die nächste Sensorabfrage ohne einen dazwischen ausgeführten Regelschritt und ohne eine dazwischen ausgeführte Parameteranpassung folgt. Es kann dann zweckmäßig der zuletzt vor einem Stellschritt abgefragte Ist-Wert des Sensors für den nächsten Regelschritt verwendet werden. Regelschritte, bei denen ein Stellschritt ermittelt und ein dem neuen Stellwert entsprechender Stellbefehl erzeugt wird, können beispielsweise dann eingeleitet werden, wenn eine Abweichung des Ist-Werts vom Sollwert festgestellt wird, die nicht mehr in einem Toleranzband liegt, und/oder wenn eine vorgegebene feste Maximalzahl von Sensorabfragen ohne darauffolgenden Regelschritt durchgeführt wurde.

Durch die Parameteranpassung, die bei 65 durchgeführt wird, wird die Güte des Regelschritts bewertet und das Regelverfahren gegebenenfalls so adaptiert, dass der Parameterwert des Regelparameters das tatsächliche Verhalten des Stellglieds und der Regelstrecke genauer abbildet. Dadurch kann erreicht werden, dass auch bei größeren Abweichungen zwischen Ist-Wert und Sollwert mit einer kleinen Anzahl von Stellbefehlen der Ist-Wert in einen bestimmten Wertebereich eingeregelt werden kann.

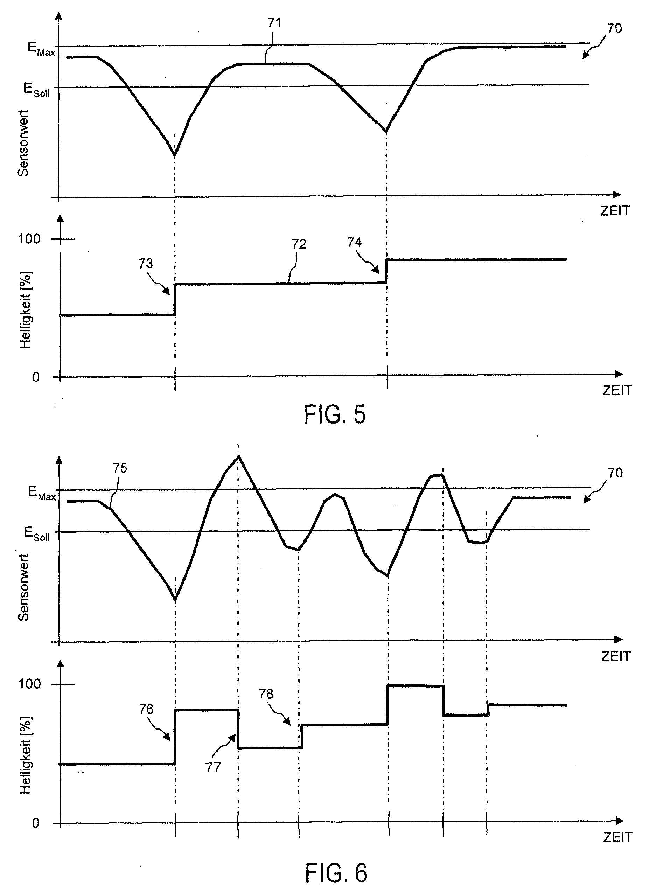

FIG. 5 veranschaulicht die Durchführung von mehreren Regelschritten bei Verfahren nach Ausführungsbeispielen, wenn der Parameterwert des Regelparameters bereits so angepasst wurde, dass er das tatsächliche Verhalten der Leuchte als Stellglied und der Regelstrecke gut abbildet.

Der Ist-Wert des Sensors, der als Sensorsignal 71 abgefragt wird, soll durch die Regelung in einen Wertebereich 70 gebracht werden. Dieser kann als untere Grenze den Sollwert $E_{Soll}$ und als obere Grenze einen Maximalwert $E_{Max}$ aufweisen. Der Maximalwert $E_{Max}$ kann um einen festen Prozentsatz, beispielsweise 3%, über dem Sollwert $E_{Soll}$ liegen.

Der Stellwert 72 der Leuchte, der die von der Leuchte abgegebene Lichtintensität bestimmt, wird jeweils in Regelschritten auf neue Stellwerte gesetzt. Der Stellwert kann beispielsweise einen Wert einer Dimmkurve definieren oder anderweitig die relative Helligkeit angeben. In einem Regelschritt 73 wird der Stellwert erhöht. Dies kann beispielsweise erforderlich werden, wenn aufgrund einer Verringerung der Beleuchtungsstärke durch Fremdlicht, z.B. durch Abschattung der Sonne durch eine Wolke, oder durch eine Verringerung der Reflexion der Bezugsfläche die erfasste Beleuchtungsstärke abnimmt. Der nachfolgende Überblendvorgang führt den vom Sensor erfassten Ist-Wert wieder in den Wertebereich 70.

Ähnlich kann in einem nachfolgenden Regelschritt 74 der Stellwert noch einmal erhöht werden, beispielsweise wenn sich das Fremdlicht auf der Bezugsfläche weiter verringert und der Ist-Wert entsprechend abnimmt.

Aufgrund der Anpassung des Parameterwerts des Regelparameters derart, dass die tatsächliche Änderung des Ist-Werts der vorhergesagten Änderung entspricht, kann der Ist-Wert durch eine geringe Anzahl von Stellbefehlen wieder in den Wertebereich 70 gebracht werden. Sofern die im Sensorsignal 71 als Reaktion auf einen Stellbefehl beobachtete Veränderung des Ist-Werts nicht zum gewünschten Resultat führt und insbesondere der sich als Reaktion auf einen Stellbefehl einstellende neue Ist-Wert nach dem Ende eines Überblendvorgangs von einer Abschätzung für den neuen Ist-Wert um mehr als eine tolerierbare Abweichung abweicht, kann der Parameterwert des Regelparameters entsprechend angepasst werden.

FIG. 6 veranschaulicht die Durchführung von mehreren Regelschritten bei Verfahren, bei denen der Parameterwert des Regelparameters ursprünglich so gesetzt ist, dass er das tatsächliche Verhalten noch nicht gut abbildet. Bei dem beispielhaft dargestellten Verlauf des Sensorsignals und Stellwerts wird der Einfluss, den ein bestimmter Stellschritt auf den Ist-Wert hat, unterschätzt, der Parameterwert des Regelparameters $E_{Pa-ram}$(alt) in Gleichung (3) ist also zu klein. Ein derartiger Fall kann beispielsweise eintreten, nachdem eine gealterte Leuchte durch eine neue Leuchte ersetzt wurde, oder nachdem eine Leuchte mit niedrigerer maximaler Leistung ersetzt wurde durch eine Leuchte mit höherer maximaler Leistung.

Durch die anfängliche Fehlanpassung des Parameterwerts des Regelparameters führt der neue Stellwert, der in einem Regelschritt 76 erzeugt und ausgegeben wird, um eine zu niedrige Beleuchtungsstärke auszugleichen, zu einem überschießenden Verhalten des Sensorsignals 75. Zur Korrektur müssen in weiteren Regelschritten 77 und 78 neue Stellbefehle erzeugt werden.

Das überschießende Verhalten bzw. Überschwingen aufgrund der anfänglichen Fehlanpassung des Parameterwerts des Regelparameters wird bei Verfahren nach Ausführungsbeispielen automatisch erkannt. Der Parameterwert des Regelparameters wird automatisch derart adaptiert, dass er nach einigen Regelschritten das reale Verhalten des Beleuchtungssystems besser abbildet. Dadurch kann eine Regelung wie in FIG. 5 dargestellt erreicht werden, bei der das Risiko eines Überschwingverhaltens oder eines Kriechverhaltens verringert ist.

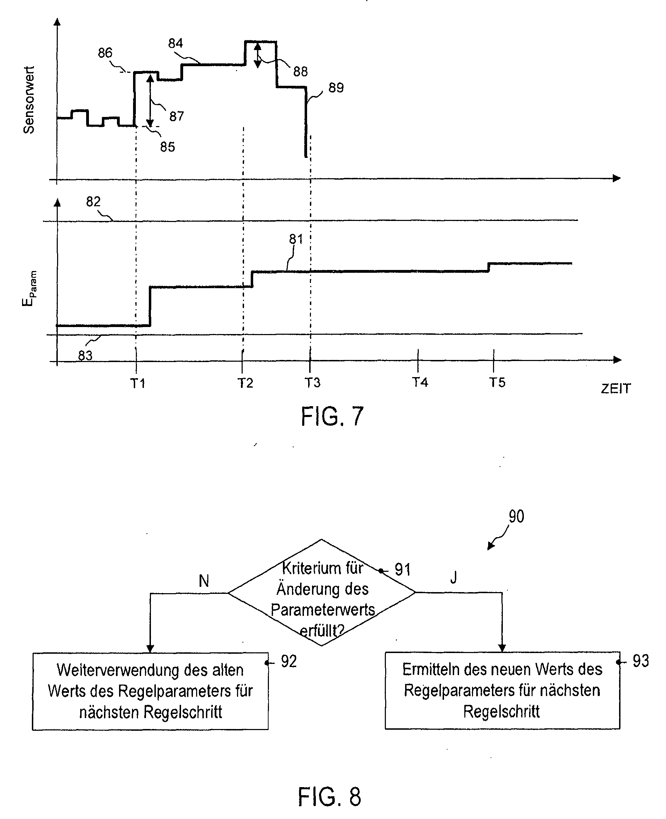

FIG. 7 illustriert die Anpassung Parameterwerts des Regelparameters. Der Parameterwert 81 des Regelparameters ist als Funktion der Zeit dargestellt. Der Parameterwert 81 des Regelparameters kann selektiv jeweils nach einem Regelschritt geändert werden. Regelschritte werden bei Zeiten T1, T2, T3, T4 und T5 ausgeführt, wobei jeweils ein entsprechender Stellbefehl ausgegeben wird, um einen neuen Stellwert für die Leuchte als Stellglied zu setzen.

Der Ist-Wert des Sensors, dessen zeitlicher Verlauf bei 84 dargestellt ist, wird vor und nach dem jeweiligen Regelschritt erfasst. Falls die Leuchte den neuen Stellwert in einem Überblendvorgang annimmt, kann der Ist-Wert des Sensors am Ende oder nach dem Ende des Überblendvorgangs verwendet werden, um die Güte des beim Regelschritt verwendeten Parameterwerts des Regelparameters zu bewerten.

Als Reaktion auf einen bei der Zeit T1 durchgeführten Regelschritt verändert sich der Ist-Wert des Sensors von einem ersten Ist-Wert 85 auf einen zweiten Ist-Wert 86. Eine Differenz 87 der Ist-Werte kann mit dem für den alten Parameterwert des Regelparameters erwarteten Sprung im Ist-Wert verglichen werden. Im illustrierten Beispiel ist der Parameterwert des Regelparameters anfangs zu klein, was zu einem überschießenden Verhalten führen kann, wie es in FIG. 6 illustriert ist.

Die Fehlanpassung des Parameterwerts des Regelparameters wird nach dem Regelschritt bei der Zeit T1 automatisch erkannt. Dazu kann die Differenz 87 in Relation zu dem Stellschritt gesetzt werden, der im Regelschritt bei T1 verwendet wurde. Ein neuer Parameterwert des Regelparameters kann beispielsweise gemäß den unter Bezugname auf Gleichungen (8) bis (12) beschriebenen Prozeduren bestimmt werden.

Ähnlich führt der bei T2 durchgeführten Regelschritt dazu, dass sich der Ist-Wert des Sensors von einem ersten Ist-Wert auf einen zweiten Ist-Wert verändert. Eine Differenz 88 der Ist-Werte kann mit dem für den alten Parameterwert des Regelparameters erwarteten Sprung im Ist-Wert verglichen werden. Es erfolgt eine entsprechende Erhöhung des Parameterwerts des Regelparameters.

Bei der Änderung des Parameterwerts des Regelparameters kann gegebenenfalls berücksichtigt werden, dass der Parameterwert des Regelparameters in einem vorgegebenen Wertebereich zwischen einer unteren Grenze 83 und einer oberen Grenze 82 liegen muss.

Eine Änderung des Parameterwerts des Regelparameters muss nicht nach jedem Regelschritt durchgeführt werden. Sobald der Parameterwert des Regelparameters so angepasst ist, dass er das tatsächliche Verhalten des Beleuchtungssystems gut beschreibt, wird eine Änderung des Parameterwerts des Regelparameters nur selten erforderlich sein. Insbesondere kann ein alter Wert des Parameterwerts des Regelparameters, der bei einem Regelschritt verwendet wurde, auch für den nachfolgenden Regelschritt verwendet werden, wenn ein Vergleich der Änderung in den Ist-Werten, die als Reaktion auf einen Stellbefehl eingetreten ist, mit dem basierend auf dem alten Wert des Parameterwerts des Regelparameters vorhergesagten Verhalten gut übereinstimmt.

Alternativ oder zusätzlich können weitere Kriterien verwendet werden, anhand derer bestimmt wird, ob eine Änderung des Parameterwerts des Regelparameters durchgeführt werden soll. Beispielsweise kann selektiv kein neuer Parameterwert des Regelparameters bestimmt werden, wenn sich die Leuchte noch in einer Einschaltphase befindet und/oder wenn der Stellschritt, der im Regelschritt ermittelt wurde, klein war. Ein weiteres Kriterium, das alternativ oder zusätzlich überprüft werden kann, beinhaltet die Änderung oder Änderungsrate des Ist-Werts des Sensors zwischen zwei Regelschritten. Eine derartige Änderung ist nicht durch eine Änderung des Stellwerts der Leuchte verursacht, sondern kann auf einen sich verändernden Fremdlichteinfluss hinweisen. In einem solchen Fall besteht das Risiko, dass eine Differenz der Ist-Werte, die vor und nach einem Regelschritt erfasst werden, wesentlich durch zeitliche Variationen im Fremdlichteinfluss beeinflusst sein können. Eine Änderung des Parameterwerts des Regelparameters kann entsprechend selektiv unterbleiben, wenn sich vor einem Regelschritt trotz gleichbleibenden Stellwerts der Leuchte der Ist-Wert des Sensors stark ändert.

FIG. 7 zeigt schematisch einen starken Abfall der Beleuchtungsstärke als Flanke 89 des Sensorwerts. Dieser Abfall wird beispielsweise in der in FIG. 3 dargestellten Unterschleife detektiert und führt zur Durchführung eines Regelschritts bei T3. Es wird jedoch kein neuer Parameterwert für den Regelparameter nach dem Regelschritt bei T3 ermittelt, da der Abfall des Ist-Werts bei der Flanke 89 anzeigt, dass sich ändernder Fremdlichteinfluss beim Regelschritt die Güte eines neuen Parameterwerts des Regelparameters beeinträchtigen könnte. Wie unter Bezugnahme auf FIG. 2 und FIG. 3 erläutert, steht Information über eine Änderung des Fremdlichteinflusses beispielsweise aus mehreren Sensorabfragen, die nacheinander zwischen aufeinanderfolgenden Regelschritten durchgeführt werden, zur Verfügung.

FIG. 8 veranschaulicht eine Prozedur 90 der Parameteranpassung, wie sie bei Element 45 des Regelkreises von FIG. 2 oder bei Schritt 66 des Verfahrens von FIG. 4 ausgeführt werden kann.

Bei 91 wird überprüft, ob ein Kriterium für eine Änderung des Parameterwerts erfüllt ist. Das Überprüfen bei 91 kann abhängig davon erfolgen, ob die als Reaktion auf einen Regelschritt beobachtete Änderung des Ist-Werts des Sensors mit einer Abschätzung übereinstimmt, die abhängig von dem alten Parameterwert des Regelparameters bestimmt wird, der im entsprechenden Regelschritt zur Bestimmung des neuen Stellwerts eingesetzt wurde.

Falls das Kriterium für eine Änderung des Parameterwerts nicht erfüllt ist, wird bei 92 der im letzten Regelschritt verwendete Parameterwerts des Regelparameters auch im nachfolgenden Regelschritt verwendet.

Falls das Kriterium für eine Änderung des Parameterwerts erfüllt ist, wird bei 93 ein neuer Parameterwert des Regelparameters ermittelt. Der neue Parameterwert kann abhängig von der Änderung des Ist-Werts des Sensors ermittelt werden, die als Reaktion auf den Regelschritt erkannt wurde. Der neue Parameterwert kann wie unter Bezugnahme auf Gleichungen (8) bis (12) beschrieben ermittelt werden.

Alternative oder zusätzliche Kriterien können verwendet werden, um zu bestimmen, ob ein neuer Parameterwert des Regelparameters bestimmt werden soll.

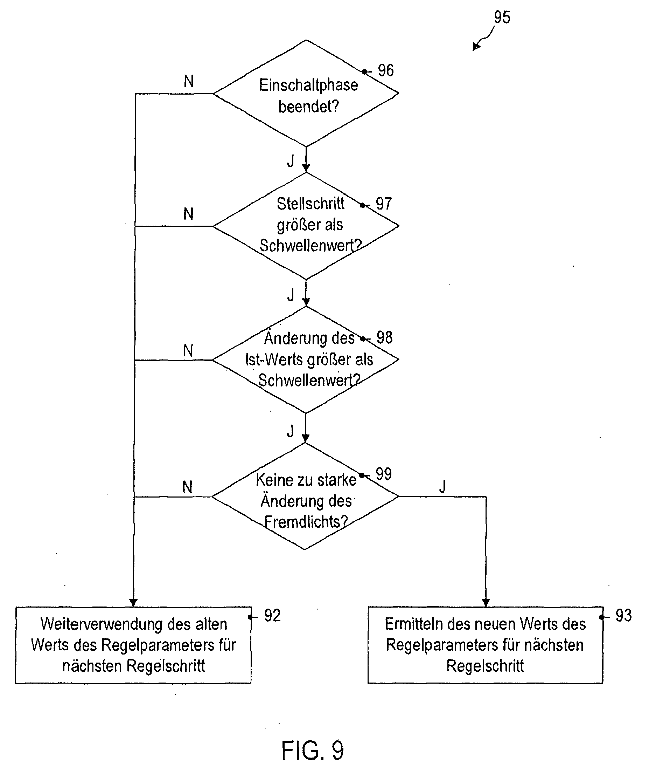

FIG. 9 veranschaulicht eine Prozedur 95 der Parameteranpassung, wie sie bei Element 45 des Regelkreises von FIG. 2 oder bei Schritt 66 des Verfahrens von FIG. 4 ausgeführt werden kann. Dabei werden kumulativ mehrere Kriterien überprüft, die die Ermittlung eines neuen Parameterwerts des Regelparameters ausschließen.

Bei 96 wird überprüft, ob sich die Leuchte noch in einer Einschaltphase befindet. Dazu kann ein Zeitraum seit Einschalten der Leuchte mit einem vorgegebenen Zeit-Schwellenwert verglichen werden. Falls der vorgegebene Zeit-Schwellenwert noch nicht erreicht ist, kann eine Änderung des Parameterwerts des Regelparameters unterdrückt werden, selbst wenn die als Reaktion auf den vorangegangenen Regelschritt beobachtete Änderung des Ist-Werts des Sensors mit einer rechnerischen Abschätzung noch nicht gut übereinstimmt. Auf diese Weise kann unterbunden werden, dass eine Anpassung des Parameterwerts des Regelparameters an ein nur transientes Verhalten der Leuchte erfolgt. Falls der vorgegebene Zeit-Schwellenwert noch nicht erreicht ist, geht die Prozedur zu Schritt 92 und verwendet den alten Parameterwert des Regelparameters auch für den nachfolgenden Regelschritt. Andernfalls fährt die Prozedur bei 97 fort.

Bei 97 kann der Stellschritt $\Delta$I, der im vorangegangenen Regelschritt verwendet wurde, mit einem Stellschritt-Schwellenwert verglichen werden. Abhängig von dem Vergleich kann eine Änderung des Parameterwerts des Regelparameters unterdrückt werden, selbst wenn die als Reaktion auf den vorangegangenen Regelschritt beobachtete Änderung des Ist-Werts des Sensors mit einer Abschätzung noch nicht gut übereinstimmt. Beispielsweise kann die Prozedur zu Schritt 92 gehen und den alten Parameterwert des Regelparameters auch für den nachfolgenden Regelschritt verwenden, falls die Bedingung

$$\Delta I < \Delta I_{\max} \qquad\qquad (14)$$

erfüllt ist. Dadurch kann das Risiko von Instabilitäten bei der Änderung des Parameterwerts des Regelparameters verringert werden. Falls die Bedingung von Gleichung (14) nicht erfüllt ist, fährt die Prozedur bei 98 fort.

Bei 98 kann überprüft werden, ob die Änderung des Ist-Werts, die als Reaktion auf den Regelschritt beobachtet wurde, größer als ein weiterer Schwellenwert oder mindestens gleich einem weiteren Schwellenwert ist. Dazu kann ermittelt werden, ob die Bedingung

$$\left| \frac{E_{Sensor}(n) - E_{Sensor}(v)}{E_{soll}} \right| \geq \Delta E_{\min} \qquad\qquad (15)$$

erfüllt ist. Falls die Bedingung nach Gleichung (15) nicht erfüllt ist, können Messwertschwankungen die Änderung des Ist-Werts, die als Reaktion auf den Regelschritt auftritt, stärker beeinflussen. Um eine zu häufige Anpassung des Parameterwerts des Regelparameters als Reaktion auf Messwertschwankungen zu unterdrücken, kann die Prozedur zu Schritt 92 gehen und den alten Parameterwert des Regelparameters auch für den nachfolgenden Regelschritt verwenden, falls die Bedingung nach Gleichung (15) nicht erfüllt ist. Andernfalls fährt die Prozedur bei 99 fort.

Bei 99 kann überprüft werden, ob sich bei mehreren aufeinanderfolgenden Abfragen des Ist-Werts, die vor dem Regelschritt durchgeführt wurden, der Ist-Wert stark geändert hat. Dadurch kann beispielsweise erkannt werden, ob eine starke Tageslichtänderung einen neuen Parameterwert des Regelparameters verfälschen könnte. Dazu kann die Differenz zwei in aufeinanderfolgenden Abfragen ermittelten Ist-Werten des Sensors, zwischen denen keine Änderung des Stellwerts erfolgt ist, mit einem weiteren Schwellenwert verglichen werden. Es kann die Bedingung

$$\left| E_{Sensor}(v1) - E_{Sensor}(v2) \right| > tl_{\max} \qquad\qquad (16)$$

überprüft werden, wobei $E_{Sensor}(v1)$ und $E_{Sensor}(v2)$ die zwei in aufeinanderfolgenden Abfragen ermittelten Ist-Werte des Sensors ohne dazwischen erfolgte Änderung des Stellwerts der Leuchte sind. Falls die Bedingung nach Gleichung (16) erfüllt ist, zeigt dies eine stärkere Änderung des Fremdlichts an, und die Prozedur kann zu Schritt 92 gehen und den alten Parameterwert des Regelparameters auch für den nachfolgenden Regelschritt verwenden. Andernfalls wird bei Schritt 93 der neue Parameterwert des Regelparameters berechnet.

Während bei der Prozedur 95 verschiedene Kriterien kumulativ erfüllt sein müssen, damit ein neuer Parameterwert des Regelparameters berechnet wird, können auch andere oder nur ein Teil der unter Bezugnahme auf FIG. 8 und FIG. 9 beschriebenen Kriterien angewandt werden. Die unter Bezugnahme auf die Prozedur 95 erläuterten Kriterien können auch in anderen Unterkombinationen oder allein überprüft werden.

Alternativ oder zusätzlich zu den unter Bezugnahme auf FIG. 8 und FIG. 9 beschriebenen Kriterien können weitere Kriterien überprüft werden, anhand derer beurteilt wird, ob der Parameterwert des Regelparameters angepasst werden soll.

Beispielsweise kann bei Ausführungsbeispielen eine Anpassung des Regelparameters dann nicht erfolgen, wenn sich nach einem Erhöhen des Stellwerts der gemessene Ist-wert verringert hat oder wenn sich nach einem Verringern des Stellwerts der gemessene Istwert erhöht hat. Eine Anpassung des Parameterwerts des Regelparameters kann unterbleiben, wenn eine der beiden folgenden Bedingungen nach Gleichung (17) oder Gleichung (18) erfüllt ist:

$$E_{Sensor}(n) > E_{Sensor}(v) \quad \text{und} \quad \Delta I \leq 0 \text{ , oder} \qquad (17)$$

$$E_{Sensor}(n) < E_{Sensor}(v) \quad \text{und} \quad \Delta I \geq 0 \text{ .} \qquad (18)$$

Die Überprüfung, ob eine der Bedingungen nach Gleichung (17) oder Gleichung (18) erfüllt ist, kann zusätzlich zu einem oder mehreren der unter Bezugnahme auf FIG. 8 und FIG. 9 beschriebenen Kriterien erfolgen. Ein Kriterium für die Unterdrückung einer Anpassung des Parameterwerts des Regelparameters kann somit von einem Vergleich eines Vorzeichens des Stellwerts und eines Vorzeichens der resultierenden Änderung des Ist-Werts abhängen.

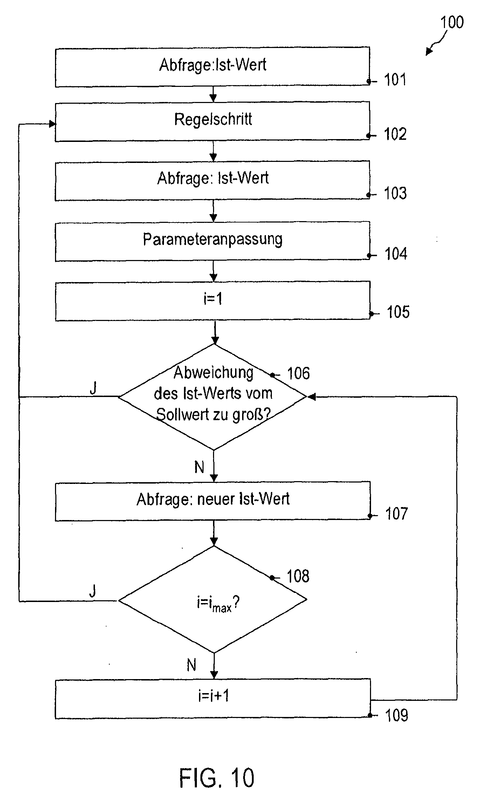

FIG. 10 ist ein Flussdiagramm eines Verfahrens 100 nach einem Ausführungsbeispiel. Das Verfahren 100 kann von der Vorrichtung 10 des Beleuchtungssystems 1 automatisch ausgeführt werden.

Bei 101 wird ein Ist-Wert eines Sensors abgefragt.

Bei 102 wird ein Regelschritt durchgeführt. Dabei wird ein neuer Stellwert für eine Leuchte abhängig von einer Abweichung zwischen dem bei 101 abgefragten Ist-Wert und einem Sollwert sowie abhängig von dem Parameterwert des Regelparameters ermittelt. Ein Stellbefehl wird entsprechend dem neuen Stellwert erzeugt.

Bei 103 wird nach dem Regelschritt in einer weiteren Abfrage des Sensors erneut ein Ist-Wert ermittelt.

Bei 104 wird eine Parameteranpassung durchgeführt. Die Parameteranpassung kann wie unter Bezugnahme auf FIG. 1-10 beschrieben durchgeführt werden. Insbesondere kann bei 104 aus der Differenz der bei 102 und 103 ermittelten Ist-Werte ermittelt werden, wie gut der Parameterwert des Regelparameters das Verhalten des Systems beschreibt. Es kann selektiv ein neuer Parameterwert des Regelparameters für den nächsten Stellschritt ermittelt werden.

In den nachfolgenden Schritten 105-109 kann die in FIG. 3 dargestellte Unterschleife des Regelkreises einmal oder mehrmals durchlaufen werden. Dabei wird der Ist-Wert des Sensors abgefragt, ohne dass ein neuer Stellschritt berechnet wird.

Bei 105 kann eine Iteration über Unterschleifen initialisiert werden. Ein Zählindex i kann auf einen Anfangswert gesetzt werden.

Bei 106 wird überprüft, ob der zuletzt abgefragte Ist-Wert des Sensors eine Abweichung vom Sollwert aufweist, die größer als ein Schwellenwert ist. Bei einer größeren Abweichung kann unmittelbar der nächste Regelschritt bei 102 durchgeführt werden. Andern-falls wird bei 107 ein weiterer Ist-Wert des Sensors abgefragt, ohne dass zuvor ein Stellbefehl erzeugt und an die Leuchte ausgegeben wird.

Bei 108 wird überprüft, ob eine vorgegebene maximale Anzahl von Wiederholungen von Abfragen des Ist-Werts ohne anschließenden Regelschritt erreicht ist. Falls eine Anzahl $i_{max}$ von Wiederholungen erreicht ist, wird bei 102 ein Regelschritt durchgeführt. Andernfalls wird bei 109 der Zählindex inkrementiert. Das Verfahren kehrt zu der Überprüfung bei 106 zurück.

Durch die Durchführung von Sensorabfragen in Kombination mit einer Überwachung der Abweichung zwischen Ist-Wert und Sollwert, wie sie bei 106 dargestellt ist, kann der Rechenaufwand durch überflüssige Stellschritte verringert und eine gutes Reaktionsverhalten auf auftretende Änderungen der Beleuchtungsstärke erreicht werden. Darüber hinaus werden so Informationen über Änderungen der Beleuchtungsstärke gewonnen, die zwischen aufeinanderfolgenden Regelschritten auftreten und nicht durch einen neuen Stellwert der Leuchte verursacht sind. Diese Informationen können verwendet werden, um zu bestimmen, ob ein neuer Parameterwert des Regelparameters ermittelt werden kann, wenn wieder ein Regelschritt ausgeführt wird.

Während Ausführungsbeispiele detailliert beschrieben wurden, können Abwandlungen bei weiteren Ausführungsbeispielen realisiert werden. Beispielsweise kann ein Beleuchtungssystem mehrere Leuchtenmodule umfassen, die mit derselben Vorrichtung zum Regeln der Beleuchtungsstärke gekoppelt sind. Alternativ oder zusätzlich kann jedes von mehreren Leuchtenmodule als intelligentes Leuchtenmodul ausgestaltet sein, das eine interne Logik umfasst, die die Funktionen der elektronischen Recheneinrichtung 11 der Vorrichtung 10 ausführt.

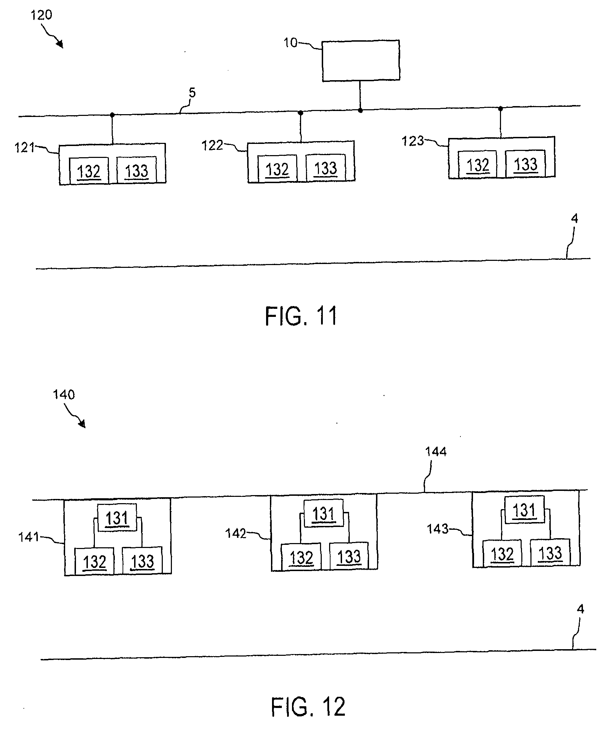

FIG. 11 ist eine schematische Darstellung eines Beleuchtungssystems 120, das mehrere Leuchtenmodule 121-123 umfasst. Jedes der Leuchtenmodule 121-123 weist eine Leuchte 132 und einen der Leuchte 132 zugeordneten Sensor 133 auf, die in ihrer Funktionsweise der Leuchte 2 und dem Sensor 3 entsprechen, die unter Bezugnahme auf FIG. 1 beschrieben wurde. Die Vorrichtung 10 ist mit den mehreren Leuchtenmodule 121-123 gekoppelt. Die Kommunikation kann über einen Bus 5 erfolgen. Die Vorrichtung 10 führt die unter Bezugnahme auf FIG. 1 bis 10 beschriebenen Funktionen für die unterschiedlichen Leuchtenmodule 121-123 als zentrale Vorrichtung aus. Dabei ist für jedes der Leuchtenmodule ein Regelparameter vorgesehen, dessen Parameterwert die Vorrichtung 10 wie unter Bezugnahem auf FIG. 1 bis 10 beschrieben anpassen kann.

FIG. 12 ist eine schematische Darstellung eines Beleuchtungssystems 140, das mehrere Leuchtenmodule 141-143 umfasst. Jedes der Leuchtenmodule 141-143 weist eine Leuchte 132 und einen der Leuchte 132 zugeordneten Sensor 133 auf, die in ihrer Funktionsweise der Leuchte 2 und dem Sensor 3 entsprechen, die unter Bezugnahme auf FIG. 1 beschrieben wurde. Jedes der Leuchtenmodule 141-143 ist als intelligentes Leuchtenmodul ausgestaltet, das eine Logik 131 umfasst. Die Logik 131 führt für das entsprechende Leuchtenmodul, in dem sie installiert ist, die unter Bezugnahme auf FIG. 1 bis 10 beschriebenen Funktionen der Regelung und Parameteranpassung nur für das entsprechende Leuchtenmodul aus. Dazu wertet die Logik 131 an einem Signaleingang empfangene Sensorwerte aus, um einen Regelschritt und eine Parameteranpassung auszuführen.

Weitere Abwandlungen können bei weiteren Ausführungsbeispielen realisiert werden. Während beispielsweise Stellbefehle als digitale Befehle ausgegeben werden, kann auch eine andere Ansteuerung erfolgen. Falls Stellbefehle nicht als digitale Befehle ausgegeben werden, muss keine Diskretisierung bzw. Digitalisierung von Stellwerten erfolgen. Stellbefehle können auch drahtlos übertragen werden.

Während bei Verfahren und Vorrichtungen nach Ausführungsbeispielen in mehreren Regelschritten jeweils ein neuer Stellbefehl erzeugt wird, muss nicht bei jedem Aufruf einer Regelprozedur ein neuer Stellbefehl erzeugt werden. Die Verfahren können zusätzlich auch Funktionsaufrufe einer Regelprozedur beinhalten, bei denen erkannt wird, dass kein neuer Stellwert ermittelt und kein neuer Stellbefehl ausgegeben werden muss, da der Sensorwert in einem gewünschten Wertebereich liegt.

Während beispielhafte Realisierungen für die Ermittlung des Stellschritts und die Ermittlung eines neuen Parameterwerts des Regelparameters beschrieben wurde, können Abwandlungen eingesetzt werden. Beispielsweise kann der neue Parameterwert des Regelparameters in der Art eines gleitenden Mittelwerts abhängig von den jeweiligen Parameterwerten bei mehreren vorangegangenen Regelschritten ermittelt werden. Der neue Parameterwert kann abhängig davon, ob er im Vergleich zum beim letzten Regelschritt verwendeten Parameterwert des Regelparameters erhöht oder erniedrigt wird, nach unterschiedlichen Prozeduren bestimmt werden.

Wenn die Leuchte einen neuen Stellwert in einem Überblendvorgang anfährt, kann eine erneute Abfrage des Ist-Werts nach Ausgabe des Stellbefehls auch innerhalb der Überblendzeit erfolgen. Bei der Parameteranpassung kann in Gleichungen (8) bis (12) rechnerisch berücksichtigt werden, dass der nach dem Regelschritt erfasste zweite Ist-Wert noch nicht dem vollen Stellschritt entspricht, sondern dass bis zu dem entsprechenden Messzeitpunkt nur ein Teil der Änderung des Stellwerts vorgenommen wurde. Der in Gleichungen (8) bis (12) eingehende Stellschritt kann entsprechend rechnerisch angepasst werden, um den noch laufenden Überblendvorgang zu berücksichtigen.

Die Erfindung betrifft auch ein Verfahren zum Regeln einer Beleuchtungsstärke, wobei die durchzuführenden Regelschritte als Funktion aus Ist- und Soll-Beleuchtungsstärke sowie einem oder mehreren Regelparametern bestimmt wird, wobei der Regelparameter bzw. die Regelparameter über ein selbstlernendes Verfahren adaptiv an die Reaktion der Regelstrecke angepasst wird bzw. werden.

Verfahren und Vorrichtungen nach Ausführungsbeispielen erzielen verschiedene Wirkungen. Da eine Anpassung der Regelung automatisch bei der Durchführung mehrerer Regelschritte, d.h. während der Laufzeit erfolgt, muss keine separate Wartung zur Anpassung vorgenommen werden. Wartungsintervalle für eine Anpassung der Regelung können so entfallen. Der Einschaltvorgang von Fluoreszenzleuchten kann berücksichtigt werden. Änderung der Reflexionseigenschaften im Erfassungsbereich und Alterung des Leuchtmittels können automatisch berücksichtigt und durch Anpassung des Parameterwerts des Regelparameters berücksichtigt werden. Die Verfahren und Vorrichtungen sind robust gegenüber einem Tausch der Leuchte, einem Ausfall und einer Wiederkehr einzelner Leuchten. Die Zeitverzögerung zwischen Messung der Beleuchtungsstärke und Änderung der Kunstbeleuchtung kann berücksichtigt werden. Ebenfalls kann eine Änderung der Fremdbeleuchtungsstärke bei den Regelschritten berücksichtigt werden. Der Datenverkehr kann verringert werden, was insbesondere bei langsamen Steuerprotokollen wünschenswert sein kann. Unterschiedliche Beleuchtungsstärken der Kunstbeleuchtung können unterstützt werden.

Verfahren und Vorrichtungen nach Ausführungsbeispielen können zur Kunstlichtregelung bei der Innenraumbeleuchtung eingesetzt werden. Verfahren und Vorrichtungen nach Ausführungsbeispielen können insbesondere zur Beleuchtung von Büroräumen, Arbeitsräumen oder Geschäftsräumen eingesetzt werden, ohne darauf beschränkt zu sein.

**Patentansprüche**

1. Verfahren zum Regeln einer Beleuchtungsstärke, wobei mehrfach die folgenden Schritte durchgeführt werden:

   Ermitteln eines Ist-Werts (71; 75; 84) eines Sensors (3; 133), der von der zu regelnden Beleuchtungsstärke abhängt und der auf einen Sollwert eingeregelt werden soll,

   Ausführen eines Regelschritts (73, 74; 76-78), wobei ein Stellschritt für eine Leuchte (2; 132) in Abhängigkeit von dem ermittelten Ist-Wert (71; 75; 84) und einem Parameterwert eines Regelparameters bestimmt wird, und wobei ein abhängig von dem Stellschritt erzeugter Stellbefehl für die Leuchte (2; 132) erzeugt wird, und

   automatisches Anpassen des Parameterwerts des Regelparameters nach wenigstens einem Regelschritt,

   **dadurch gekennzeichnet,**

   **dass** bei dem automatischen Anpassen des Parameterwerts des Regelparameters ein neuer Parameterwert des Regelparameters abhängig von einem ersten Ist-Wert (71; 75; 84) des Sensors (3; 133), der vor dem entsprechenden Regelschritt (73, 74; 76-78) ermittelt wird, und einem zweiten Ist-Wert (71; 75; 84) des Sensors (3; 133), der nach dem entsprechenden Regelschritt (73, 74; 76-78) ermittelt wird, bestimmt wird.

2. Verfahren nach Anspruch 1,
   wobei in dem Regelschritt (73, 74; 76-78) der Stellschritt abhängig von einer Differenz zwischen dem Sollwert und dem ermittelten Ist-Wert (71; 75; 84) sowie abhängig von dem Parameterwert des Regelparameters bestimmt wird.

3. Verfahren nach Anspruch 2,
   wobei in dem Regelschritt (73, 74; 76-78) der Stellschritt als Produkt aus der Differenz und einem Proportionalitätsfaktor, der von dem Parameterwert des Regelparameters abhängt, bestimmt wird.

4. Verfahren nach einem der Ansprüche 1-3,
   wobei bei dem automatischen Anpassen der neue Parameterwert des Regelparameters abhängig von einer Differenz (87, 88) zwischen dem zweiten Ist-Wert (86) und dem ersten Ist-Wert (85) und abhängig von dem in dem entsprechenden Regelschritt (73, 74; 76-78) ermittelten Stellschritt bestimmt wird.

5. Verfahren nach einem der vorhergehenden Ansprüche,
   wobei zwischen zwei aufeinanderfolgenden Regelschritten (73, 74) mehrere Abfragen eines Sensors (3; 133) jeweils zum Ermitteln des Ist-Werts (71; 75; 84) durchgeführt werden, und
   wobei eine Anzahl der mehreren Abfragen, die vor dem Ausführen des zweiten Regelschritts (74) der zwei aufeinanderfolgenden Regelschritte (73, 74) durchgeführt werden, von einer Differenz zwischen einem in wenigstens einer der mehreren Abfragen ermittelten Ist-Wert (71; 75; 84) und dem Sollwert abhängt.

6. Verfahren nach Anspruch 5,
   wobei abhängig von den in den mehreren Abfragen des Sensors (3; 133) ermittelten Ist-Werten eine Änderung des Fremdlichteinflusses (89) vor dem Ausführen des zweiten Regelschritts (73) der zwei aufeinanderfolgenden Regelschritte (73, 74) abgeschätzt wird, und
   wobei das automatische Anpassen des Parameterwerts des Regelparameters nach dem zweiten Regelschritt (74) selektiv abhängig von einem Schwellenwertvergleich der Änderung des Fremdlichteinflusses (89) durchgeführt wird.

7. Verfahren nach einem der vorhergehenden Ansprüche,
   wobei nach der Ausführung eines Regelschritts (73, 74; 76-78) folgende Schritte durchgeführt werden:

   Ermitteln einer Abweichung zwischen dem zweiten Ist-Wert (86), der nach dem Regelschritt (73, 74; 76-78) ermittelt wird, und einer rechnerischen Abschätzung für den Ist-Wert, die abhängig von dem in dem Regelschritt (73, 74; 76-78) verwendeten Parameterwert des Regelparameters bestimmt wird, und

   selektives Einleiten des automatischen Anpassens abhängig von der ermittelten Abweichung.

8. Verfahren nach einem der vorhergehenden Ansprüche,
   wobei nach einem Regelschritt (73, 74; 76-78) das automatische Anpassen des Parameterwerts des Regelparameters jeweils selektiv abhängig von einem Kriterium, das von wenigstens einer der folgenden Größen abhängt, eingeleitet wird:

   dem in dem Regelschritt (73, 74; 76-78) ermitteltem Stellschritt;
   einer zeitlichen Änderung eines Fremdlichteinflusses (89) vor dem Regelschritt;

einer Zeitdauer seit Einschalten der Leuchte (2; 132) bis zu dem Regelschritt;
einer Differenz zwischen dem ersten Ist-Wert (85), der vor dem Regelschritt (73, 74; 76-78) ermittelt wird, und dem zweiten Ist-Wert (86), der nach dem Regelschritt (73, 74; 76-78) ermittelt wird.

9. Verfahren nach einem der vorhergehenden Ansprüche,
wobei der neue Parameterwert des Regelparameters nach einem Regelschritt (73, 74; 76-78) jeweils in Abhängigkeit von

$$\frac{E_{Sensor}(n) - E_{Sensor}(v)}{\Delta I}$$

ermittelt wird, wobei $E_{Sensor}(v)$ der erste Ist-Wert (85), der vor dem entsprechenden Regelschritt (73, 74; 76-78) ermittelt wird, $E_{Sensor}(n)$ der zweite Ist-Wert (86), der nach dem entsprechenden Regelschritt (73, 74; 76-78) ermittelt wird, und $\Delta I$ der in dem entsprechenden Regelschritt (73, 74; 76-78) ermittelte Stellschritt ist.

10. Verfahren nach Anspruch 9,
wobei der neue Parameterwert des Regelparameters nach einem Regelschritt (73, 74; 76-78) jeweils in Abhängigkeit von

$$(1 - p) \cdot E_{Param}(alt) + p \cdot \frac{E_{Sensor}(n) - E_{Sensor}(v)}{\Delta I}$$

ermittelt wird, wobei $E_{Param}(alt)$ der Parameterwert des Regelparameters ist, der in dem Regelschritt (73, 74; 76-78) zum Ermitteln des Stellschritts verwendet wurde, und wobei p eine reelle Zahl ist, die $0 \leq p \leq 1$ erfüllt.

11. Verfahren nach Anspruch 10,
wobei der neue Parameterwert des Regelparameters abhängig davon, ob die Bedingung

$$\frac{E_{Sensor}(n) - E_{Sensor}(v)}{\Delta I} > E_{Param}(alt)$$

erfüllt ist, nach unterschiedlichen Prozeduren ermittelt wird.

12. Verfahren nach Anspruch 10 oder Anspruch 11,
wobei in dem Regelschritt (73, 74; 76-78) der Stellschritt abhängig von

$$\frac{E_{Soll} - E_{Sensor}(v)}{E_{Param}(alt)}$$

ermittelt wird, wobei $E_{Soll}$ der Sollwert ist.

13. Vorrichtung zum Regeln einer Beleuchtungsstärke, umfassend:

einen Eingang (14) zum Empfangen eines Ist-Werts (71; 75; 84) eines Sensors (3; 133), der von der zu regelnden Beleuchtungsstärke abhängt und der auf einen Sollwert geregelt werden soll; und
eine mit dem Eingang (14) gekoppelte elektronische Recheneinrichtung (11; 131), die eingerichtet ist,
um einen Stellschritt für eine Leuchte (2; 132) in Abhängigkeit von dem Ist-Wert (71; 75; 84) und einem Parameterwert eines Regelparameters zu bestimmen, und
um einen Stellbefehl abhängig von dem Stellschritt zu erzeugen,
**dadurch gekennzeichnet,**
**dass** die elektronische Recheneinrichtung (11; 131) eingerichtet ist, um einen neuen Parameterwert des Regelparameters abhängig von einem ersten Ist-Wert (85), der vor dem entsprechenden Regelschritt (73, 74; 76-78) empfangen wird, und einem zweiten Ist-Wert (6), der nach dem entsprechenden Regelschritt (73, 74;

76-78) ermittelt wird, zu bestimmen.

**14.** Vorrichtung nach Anspruch 13, umfassend:

einen Sensor (3; 133), der mit dem Eingang (14) gekoppelt und eingerichtet ist, um den Ist-Wert (71; 75; 84) an den Eingang (14) bereitzustellen, und
eine Leuchte (2; 132), die mit der elektronischen Steuereinrichtung (11; 131) gekoppelt und eingerichtet ist, um als Antwort auf den Stellbefehl eine abgegebene Lichtleistung gemäß dem Stellbefehl zu ändern.

**15.** Vorrichtung nach Anspruch 13 oder Anspruch 14,
die zur Durchführung des Verfahrens nach einem der Ansprüche 2-12 eingerichtet ist.

**Claims**

**1.** A method for regulating an illuminance wherein the following steps are carried out a number of times:

Determination of an actual value (71; 75; 84) of a sensor (3; 133), which depends on the illuminance to be regulated and which is to be adjusted to a target value,
execution of a control step (73, 74; 76-78), wherein an adjusting step is determined for a lamp (2; 132) depending on the determined actual value (71; 75; 84) and a parameter value of a control parameter, and wherein an adjusting command generated depending on the adjusting step is generated for the lamp (2; 132), and
automatic adjustment of the parameter value of the control parameter after at least one control step,
**characterized in**
**that** during the automatic adjustment of the parameter value of the control parameter a new parameter value of the control parameter is determined depending on a first actual value (71; 75; 84) of the sensor (3; 133), which is determined before the corresponding control step (73, 74; 76-78) and a second actual value (71; 75; 84) of the sensor (3; 133), which is determined after the corresponding control step (73, 74; 76-78).

**2.** A method according to Claim 1,
wherein in the control step (73, 74; 76-78) the adjusting step is determined depending on a difference between the target value and the determined actual value (71; 75; 84) as well as depending on the parameter value of the control parameter.

**3.** A method according to Claim 2,
wherein in the control step (73, 74; 76-78) the adjusting step is determined as a product of the difference and a proportionality factor, which depends on the parameter value of the control parameter.

**4.** A method according to any one of Claims 1-3,
wherein during the automatic adjustment the new parameter value of the control parameter is determined depending on a difference (87, 88) between the second actual value (86) and the first actual value (85) and depending on the adjusting step determined in the corresponding control step (73, 74; 76-78).

**5.** A method according to one of the preceding claims,
wherein between two successive control steps (73, 74) several queries of a sensor (3; 133) are in each case carried out to determine the actual value (71; 75; 84), and
wherein a number of the several queries, which are carried out before the execution of the second control step (74) of the two successive control steps (73, 74), depends on a difference between an actual value (71; 75; 84) determined in at least one of the several queries and the target value.

**6.** A method according to Claim 5,
wherein depending on the actual values determined in the several queries of the sensor (3; 133) a change in the extraneous light influence (89) is evaluated before the execution of the second control step (73) of the two successive control steps (73, 74), and
wherein the automatic adjustment of the parameter value of the control parameter is carried out selectively after the second control step (74) depending on a threshold value comparison of the change in the extraneous light influence (89).

**7.** A method according to one of the preceding claims,
wherein after execution of a control step (73; 74; 76-78) the following steps are carried out:

Determination of a deviation between the second actual value (86), which is determined after the control step (73, 74; 76-78), and an arithmetical evaluation for the actual value, which is determined depending on the parameter value of the control parameter used in the control step (73, 74; 76-78), and
selective initiation of the automatic adjustment depending on the deviation determined.

**8.** A method according to one of the preceding claims,
wherein after a control step (73, 74; 76-78) the automatic adjustment of the parameter value of the control parameter is in each case initiated selectively depending on a criterion, which depends on at least one of the following variables:

the adjusting step determined in the control step (73, 74; 76-78);
a temporal change of an extraneous light influence (89) before the control step;
a period of time since switching on the lamp (2; 132) until the control step;
a difference between the first actual value (85), which is determined before the control step (73, 74; 76-78), and the second actual value (86), which is determined after the control step (73, 74; 76-78).

**9.** A method according to one of the preceding claims,
wherein the new parameter value of the control parameter is determined after a control step (73, 74; 76-78) in each case depending on

$$\frac{E_{Sensor}(n) - E_{Sensor}(v)}{\Delta I}$$

wherein $E_{Sensor}(v)$ is the first actual value (85), which is determined before the corresponding control step (73, 74; 76-78), $E_{sensor}(n)$ is the second actual value (86), which is determined after the corresponding control step (73, 74; 76-78), and $\Delta I$ is the adjusting step determined in the corresponding control step (73, 74; 76-78).

**10.** A method according to Claim 9,
wherein the new parameter value of the control parameter is determined after a control step (73, 74; 76-78) in each case depending on

$$(1 - p) \cdot E_{Param}(alt) + p \cdot \frac{E_{Sensor}(n) - E_{Sensor}(v)}{\Delta I}$$

wherein $E_{Param}(alt)$ is the parameter value of the control parameter, which was used in the control step (73, 74; 76-78) for determining the adjusting step, and wherein p is a real number, which satisfies $0 \leq p \leq 1$.

**11.** A method according to Claim 10,
wherein the new parameter value of the control parameter is determined according to different procedures depending on whether the condition

$$\frac{E_{sensor}(n) - E_{sensor}(v)}{\Delta I} > E_{Param}(alt)$$

is satisfied.

**12.** A method according to Claim 10 or Claim 11,
wherein in the control step (73, 74; 77-78) the adjusting step is determined depending on

$$\frac{E_{target} - E_{sensor}(v)}{E_{Param}(alt)}$$

wherein $E_{Target}$ is the target value.

**13.** A device for regulating an illuminance, comprising:

An input (14) for receiving an actual value (71; 75; 84) of a sensor (3; 133), which depends on the illuminance to be regulated and which is to be regulated to a target value; and
an electronic computing device (11; 131) coupled with the input (14), which is equipped,
in order to determine an adjusting step for a lamp (2; 132) depending on the actual value (71; 75; 84) and a parameter value of a control parameter, and
in order to generate an adjusting command depending on the adjusting step,
**characterized in**
**that** the electronic computing device (11; 131) is set up, in order to determine a new parameter value of the control parameter depending on a first actual value (85), which is received before the corresponding control step (73, 74; 76-78), and a second actual value (6), which is determined after the corresponding control step (73, 74; 76-78).

**14.** A device according to Claim 13, comprising:

A sensor (3; 133), which is coupled and equipped with an input (14), in order to provide the actual value (71; 75; 84) to the input (14), and
a lamp (2; 132), which is coupled and equipped with the electronic control device (11; 131), in order as a response to the adjusting command to change an emitted light output according to the adjusting command.

**15.** A device according to Claim 13 or Claim 14,
which is equipped for implementing a method according to any one of Claims 2-12.

## Revendications

**1.** Procédé de régulation d'une intensité d'éclairage, les étapes suivantes étant effectuées plusieurs fois :

détermination d'une valeur effective (71 ; 75 ; 84) d'un capteur (3 ; 133) qui dépend de l'intensité d'éclairage à réguleret qui doit être régulée à une valeur de consigne,
réalisation d'une étape de régulation (73 , 74 ; 76-78), une étape de réglage étant définie pour un luminaire (2 ; 132) en fonction de la valeur effective (71 ; 75 ; 84) déterminée et d'une valeur de paramètre d'un paramètre de régulation, et une instruction de réglage pour leluminaire (2 ; 132) étant produite en fonction de l'étape de réglage,
adaptation automatique de la valeur de paramètre du paramètre de régulation après au moins une étape de régulation,
**caractérisé en ce que**,
lors de l'adaptation automatique de la valeur de paramètre du paramètre de régulation, une nouvelle valeur de paramètre du paramètre de régulation est définie en fonction d'une première valeur effective (71 ; 75 ; 84) du capteur (3; 133) qui est déterminée avant l'étape de régulation (73, 74 ; 76-78)correspondante, et d'une deuxième valeur effective (71 ; 75 ; 84) du capteur (3 ; 133) qui est déterminée après l'étape de régulation (73 , 74 ; 76-78)correspondante.

**2.** Procédé selon la revendication 1,
l'étape de réglage étant, dans l'étape de régulation (73 , 74 ; 76-78), définie en fonction d'une différence entre la valeur de consigne et la valeur effective (71 ; 75 ; 84) déterminée ainsi qu'en fonction de la valeur de paramètre du paramètre de régulation.

**3.** Procédé selon la revendication 2,
l'étape de réglage étant, dans l'étape de régulation (73 , 74 ; 76-78), définie en tant que produit de la différence et d'un facteur de proportionnalité qui dépend de la valeur de paramètre du paramètre de régulation.

**4.** Procédé selon l'une des revendications 1-3,
la nouvelle valeur de paramètre du paramètre de régulation étant, lors de l'adaptation automatique, définie en fonction d'une différence (87, 88) entre la deuxième valeur effective (86) et la première valeur effective (85) et en fonction de l'étape de réglage déterminée dans l'étape de régulation (73 , 74 ; 76-78)correspondante.

**5.** Procédé selon l'une des revendications précédentes,
plusieurs demandes d'un capteur (3 ; 133) étant, entre deux étapes de régulation (73, 74) consécutives, effectuées respectivement pour la détermination de la valeur effective (71 ; 75 ; 84), et
un certain nombre des plusieurs demandes qui ont été effectuées avant la réalisation de la deuxième étape de régulation (74) des deux étapes de régulation (73, 74) consécutives dépendant d'une différence entre une valeur effective (71 ; 75 ; 84) déterminée dans au moins une des plusieurs demandes et la valeur de consigne.

**6.** Procédé selon la revendication 5,
une modification de l'influence de lumière extérieure (89) étant, en fonction des valeurs effectives déterminées dans les plusieurs demandes du capteur (3 ; 133), estimée avant la réalisation de la deuxième étape de régulation (73) des deux étapes de régulation (73, 74)consécutives, et
l'adaptation automatique de la valeur de paramètre du paramètre de régulation étant effectuée après la deuxième étape de régulation (74) de façon sélective en fonction d'une comparaison de valeurs de seuil de la modification de l'influence de lumière extérieure (89).

**7.** Procédé selon l'une des revendications précédentes,
les étapes suivantes étant effectuées après la réalisation d'une étape de régulation (73 , 74 ; 76-78) :

détermination d'une divergence entre la deuxième valeur effective (86) qui a été déterminée après l'étape de régulation (73 , 74 ; 76-78) et une estimation par le calcul, pour la valeur effective, qui est définie en fonction de la valeur de paramètre du paramètre de régulation utilisée dans l'étape de régulation (73 , 74 ; 76-78), et
commencement sélectif de l'adaptation automatique en fonction de la divergence déterminée.

**8.** Procédé selon l'une des revendications précédentes,
l'adaptation automatique de la valeur de paramètre du paramètre de régulation étant, après une étape de régulation (73 , 74 ; 76-78), commencéerespectivement de façon sélective en fonction d'un critère qui dépend au moins d'une des grandeurs suivantes :

l'étape de réglage déterminée dans l'étape de régulation (73 , 74 ; 76-78) ;
une modification temporelle d'une influence de lumière extérieure (89) avant l'étape de régulation ; une durée depuis la mise en circuit du luminaire (2 ; 132) jusqu'à l'étape de régulation ;
une différence entre la première valeur effective (85) qui est déterminée avant l'étape de régulation (73 , 74 ; 76-78) et la deuxième valeur effective (86) qui est déterminée après l'étape de régulation (73 , 74 ; 76-78).

**9.** Procédé selon l'une des revendications précédentes,
la nouvelle valeur de paramètre du paramètre de régulation étant déterminée après une étape de régulation (73 , 74 ; 76-78)respectivement en fonction de

$$\frac{E_{Sensor}(n) - E_{Sensor}(v)}{\Delta I}$$

$E_{Sensor}(v)$ étant la première valeur effective (85) qui est déterminée avant l'étape de régulation (73 , 74 ; 76-78)correspondante, $E_{Sensor}(n)$ étant la deuxième valeur effective (86) qui est déterminée après l'étape de régulation (73 , 74 ; 76-78)correspondante, et $\Delta I$ étant l'étape de réglage déterminée dans l'étape de régulation (73 , 74 ; 76-78)correspondante.

**10.** Procédé selon la revendication 9,
la nouvelle valeur de paramètre du paramètre de régulation étant déterminée après une étape de régulation (73 , 74 ; 76-78)respectivement en fonction de

$$(1 - p) \cdot E_{Param}(alt) + p \cdot \frac{E_{Sensor}(n) - E_{Sensor}(v)}{\Delta I}$$

$E_{Param}(alt)$ étant la valeur de paramètre du paramètre de régulation qui a été utilisée dans l'étape de régulation (73 , 74 ; 76-78) pour la détermination de l'étape de réglage, et p étant un nombre réel qui respecte la condition 0 ≤p≤ 1.

**11.** Procédé selon la revendication 10,
la nouvelle valeur de paramètre du paramètre de régulation étant déterminée selon différentes procédures selon que la condition

$$\frac{E_{Sensor}(n) - E_{Sensor}(v)}{\Delta I} > E_{Param}(alt)$$

est respectée ou non.

**12.** Procédé selon la revendication 10 ou la revendication 11,
l'étape de réglage étant, dans l'étape de régulation (73 , 74 ; 76-78), déterminée en fonction de

$$\frac{E_{Soll} - E_{Sensor}(v)}{E_{Param}(alt)}$$

$E_{Soll}$ étant la valeur de consigne.

**13.** Dispositif de régulation d'une intensité d'éclairage, comprenant
une entrée (14) pour la réception d'une valeur effective (71 ; 75 ; 84) d'un capteur (3 ; 133) qui dépend de l'intensité d'éclairageà réguler et qui doit être régulée à une valeur de consigne ; et
undispositif de calcul (11 ; 131) électronique couplé à l'entrée (14), qui est aménagé
pour définir une étape de réglage pour un luminaire (2 ; 132) en fonction de la valeur effective (71 ; 75 ; 84) et d'une valeur de paramètre d'un paramètre de régulation, et
pour produire une instruction de réglage en fonction de l'étape de réglage,
**caractérisé en ce que**
ledispositif de calcul (11 ; 131) électronique est aménagé pour définir une nouvelle valeur de paramètre du paramètre de régulation en fonction d'une première valeur effective (85) qui est reçue avant l'étape de régulation (73, 74 ; 76-78)correspondante, et d'une deuxième valeur effective (6) qui est déterminée après l'étape de régulation (73 , 74 ; 76-78)correspondante.

**14.** Dispositif selon la revendication 13, comprenant :

un capteur (3 ; 133) qui est couplé à l'entrée (14) et aménagé pour fournir la valeur effective (71 ; 75 ; 84) à l'entrée (14), et
unluminaire (2 ; 132) qui est couplé au dispositif de calcul (11 ; 131) électronique et aménagé pour, en tant que réponse à l'instruction de réglage, modifier une puissance lumineuse délivrée selon l'instruction de réglage.

**15.** Dispositif selon la revendication 13 ou la revendication 14,
qui est aménagé pour mettre en oeuvre le procédé selon l'une des revendications 2-12.

FIG. 1

FIG. 2

Regelstrecke

43

Leuchte

42

Sensor

44

56

57

Regler

41

Parameteranpassung

45

## FIG. 3

60

| Abfrage: erster Ist-Wert vor Regelschritt | 61 |

| Ermitteln eines Stellschritts | 62 |

| Erzeugen Stellbefehl | 63 |

| Abfrage: zweiter Ist-Wert nach Regelschritt | 64 |

| Parameteranpassung | 65 |

| erster Ist-Wert = zweiter Ist-Wert | 66 |

## FIG. 4

FIG. 5

FIG. 6

FIG. 7

FIG. 8

FIG. 9

100

| Abfrage:Ist-Wert | 101 |

↓

| Regelschritt | 102 |

↓

| Abfrage: Ist-Wert | 103 |

↓

| Parameteranpassung | 104 |

↓

| i=1 | 105 |

↓

Abweichung des Ist-Werts vom Sollwert zu groß? — 106

J →

N ↓

| Abfrage: neuer Ist-Wert | 107 |

↓

$i=i_{max}$? — 108

J →

N ↓

| i=i+1 | 109 |

FIG. 10

120

10

5

121
132 133

122
132 133

123
132 133

4

FIG. 11

140

144

141
131
132 133

142
131
132 133

143
131
132 133

4

FIG. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0245478 A1

- US 2008074059 A1